(19) Europäisches Patentamt / European Patent Office / Office européen des brevets

(11) **EP 2 530 621 A2**

(12) **EUROPEAN PATENT APPLICATION**

(43) Date of publication:
05.12.2012 **Bulletin 2012/49**

(51) Int Cl.:
**G06K 9/00** (2006.01)

(21) Application number: **12170325.0**

(22) Date of filing: **31.05.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.05.2011 US 201161491766 P**
**26.04.2012 US 201213457019**

(71) Applicant: **Canberra Industries, Inc.**
**Meriden, CT 06450 (US)**

(72) Inventor: **Russ, William**
**Meriden, CT Connecticut 06424 (US)**

(74) Representative: **Thompson, Andrew John**
**Withers & Rogers LLP**
**4 More London Riverside**
**London**
**SE1 2AU (GB)**

(54) **Spectrometer calibration system and method**

(57) A spectrometer calibration system and method that permits a database of spectral peak shapes to be applied as basis template functions to characterize a radiation detector is disclosed. The disclosed system/ method interpolates stored arrays representing a series of spectral peak shapes at a range of specified energies to enable formation of a calibration peak shape template at any desired spectral energy level. These basis functions may be generated from analytical functions and/or empirically measured spectral data and produce output shape calibration templates that are independent of the generation method for the basis templates. The disclosed system/method acts as an abstraction layer between the method of peak shape determination and the use of the peak shape basis functions in any subsequent spectroscopic analysis, permitting rapid and inexpensive spectrometer calibration updates without the need for any embedded spectrometer software modifications.

FIG. 1

Prior Art

**Description**

**CROSS REFERENCE TO RELATED APPLICATIONS**

This application claims the benefit of U.S. provisional application entitled "UNIVERSAL PEAK SHAPE CALIBRATION", serial number 61/491,766, filed electronically on May 31, 2011.

This application also claims the benefit of U.S. application entitled "SPECTROMETER CALIBRATION SYSTEM AND METHOD", serial number 13/457,019, filed electronically on April 26, 2012.

**PARTIAL WAIVER OF COPYRIGHT**

All of the material in this patent application is subject to copyright protection under the copyright laws of the United States and of other countries. As of the first effective filing date of the present application, this material is protected as unpublished material.

However, permission to copy this material is hereby granted to the extent that the copyright owner has no objection to the facsimile reproduction by anyone of the patent documentation or patent disclosure, as it appears in the United States Patent and Trademark Office patent file or records, but otherwise reserves all copyright rights whatsoever.

**STATEMENT REGARDING FEDERALLY SPONSORED RESEARCH OR DEVELOPMENT**

Not Applicable

**REFERENCE TO A MICROFICHE APPENDIX**

Not Applicable

**FIELD OF THE INVENTION**

The present invention relates generally to radionuclide spectroscopy and, more specifically, to a system and method for calibrating the detector peak shape response of a spectrometer for use in radionuclide spectral analysis.

**PRIOR ART AND BACKGROUND OF THE INVENTION**

<u>Overview</u>

Spectroscopy systems require frequent calibration of the associated radiation detectors. Calibration of the detectors typically includes measurement of a known radionuclide source and approximation of the resulting peak shapes generated in the measured energy histogram or spectrum. The peak shape calibration is then utilized by the spectroscopy analysis engine in subsequent radionuclide analyses.

However, current peak shape calibrations are limited to a single analytical peak shape model that is embedded as hard-coded integral features in the typical spectroscopic analysis engines. For example, certain radionuclide spectroscopic analysis engines use a Gaussian peak shape model with an optional low energy tailing feature for detector calibration. Others use a Gaussian model with optional Lorentzian broadening, two low energy tailing exponentials, and a high energy tailing exponential to calibrate the detector response. Thus, a wide variety of mathematical functions have been employed over the years to handle an equally wide variety of detectors and applications that yield significantly different spectral peak shapes. Each time a different peak shape analytical form is required, a customized peak shape calibration and associated analysis engine tailored to the analytical form has been required. This is inefficient and costly, proliferating software development requirements.

For example, some radiation detectors exhibit extreme peak tailing characteristics, including alpha spectroscopy (i.e., PIPS, surface barrier, and the like) and semiconductors suffering from excess hole-trapping (such as certain CZTs). Default peak-shape modeling techniques have been unable to satisfactorily render accurate detector responses for these detectors. Currently, it is necessary to rewrite each spectral analysis engine algorithm to explicitly handle each different peak shape model of interest. What is needed is the ability to seamlessly switch to more appropriate alternative models or to train an empirical model that could intrinsically accommodate each detector's distinctive characteristics without rewriting the spectral analysis engine software for each radionuclide source and detector combination.

### Prior Art Calibration System (0100)

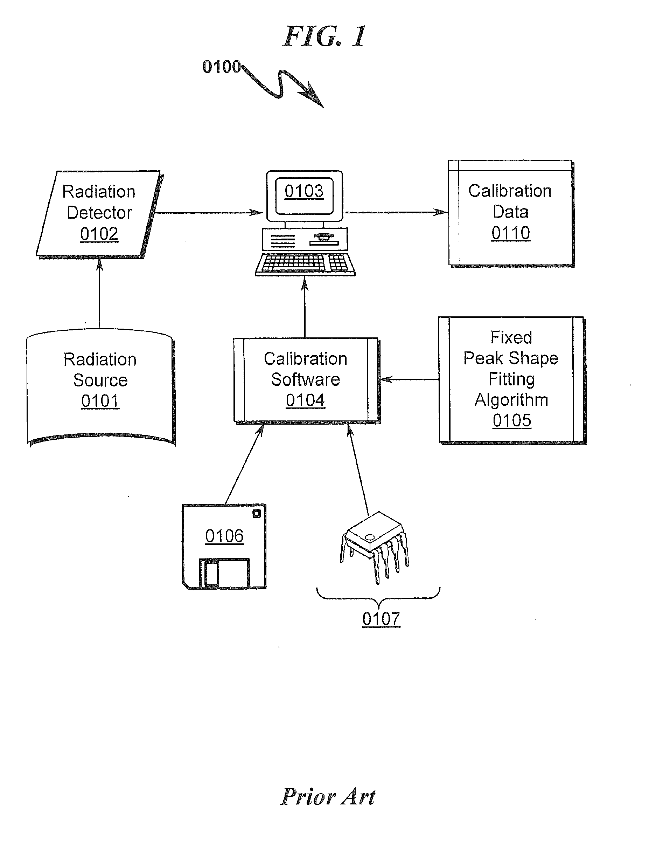

The prior art as it relates to a spectrometer calibration system can typically be depicted as shown in FIG. 1 **(0100)** wherein the radiation source **(0101)** is detected with a radiation detector **(0102)** and processed by a computer system **(0103)** using calibration software **(0104)** incorporating fixed peak shape fitting algorithms **(0105)**. This software **(0104, 0105)** is typically stored in computer readable media **(0106)** which may be of a semi-permanent character **(0107)**. The results of the calibration software **(0104, 0105)** is calibration data **(0110)** for the radiation detector **(0102)**. A key maintenance issue in this hardware configuration is the maintenance of the calibration and subsequent analysis software **(0104)**, especially if a large or varying number of peak shape fitting algorithms **(0105)** are to be supported by the spectrometer system.

### Prior Art Calibration Method (0200)

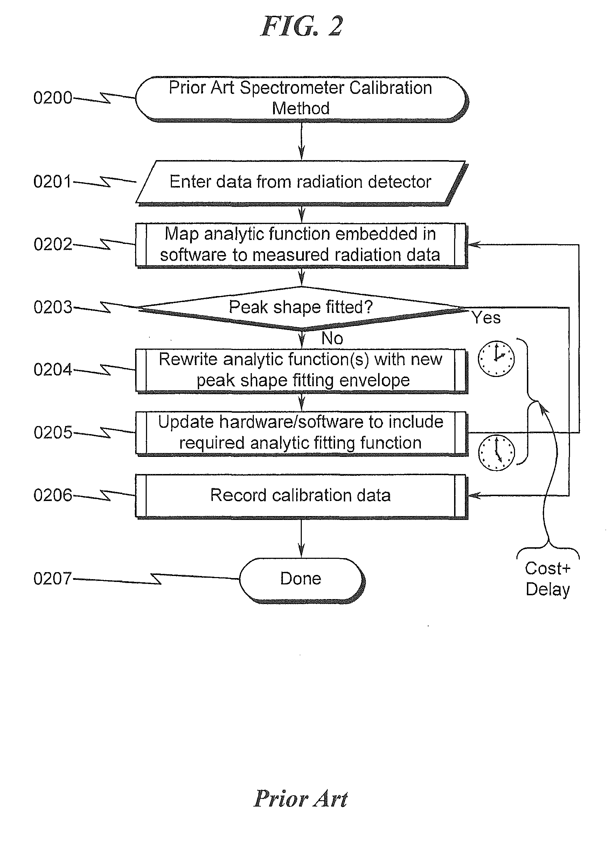

The system in FIG. 1 (0100) typically incorporates a calibration method generally illustrated in FIG. 2 **(0200)**. This method typically incorporates the following steps:

(1) Data is entered from a radiation detector **(0201)**;

(2) An analytic function embedded in calibration software is mapped to the measured peaks of the radiation data **(0202)**;

(3) If the peak shape is properly fitted, control passes to step (6) **(0203)**;

(4) Otherwise new analytic functions are (re)written to fit the measured peak shape envelope **(0204)**;

(5) After significant time delays and cost expenditures, hardware/software calibration component(s) of the spectrometer are updated with the new analytic functions and control passes to step (2) **(0205)**;

(6) The spectrometer calibration data is recorded for use in future spectrometer measurements **(0206)**; and

(7) The calibration method terminates **(0207)**.

It should be noted that steps (4) and (5) are typically both time consuming and costly since updates to the calibration software peak shape fitting algorithms must undergo significant software development, quality control, and other manufacturing steps in order to be properly deployed. Furthermore, the semi-permanent nature of the distributed software (FIG. 1 (0107)) may actually require hardware upgrades to the spectrometer system in the field, a time consuming and costly event.

### Deficiencies in the Prior Art

The prior art as detailed above suffers from the following deficiencies:

- The integration of calibration fitting functions within embedded spectrometer software requires significant maintenance and modification costs to incorporate new or updated calibration models.

- Integration of empirically collected shape models and analytic function modeling of peak shapes is not possible with the prior art.

- The peak shape model fitting capabilities of the prior art are inherently limited by a limited number of embedded peak shape fitting functions, resulting in poor peak shape fitting and poor overall spectrometer calibration characteristics.

While some of the prior art may teach some solutions to several of these problems, the core issues of overcoming the software maintenance costs and other issues associated with embedded spectrometer software peak shape calibration algorithms while simultaneously permitting rapid deployment of new calibration models in the field has not been addressed by the prior art.

**OBJECTIVES OF THE INVENTION**

Accordingly, the objectives of the present invention are (among others) to circumvent the deficiencies in the prior art and affect the following objectives:

(1) Provide for a spectrometer calibration system and method that permits incorporation of analytic peak shape functions within the spectrometer calibration framework.

(2) Provide for a spectrometer calibration system and method that permits incorporation of empirically measured peak shape functions within the spectrometer calibration framework.

(3) Provide for a spectrometer calibration system and method that permits integration of analytic and empirical models within the spectrometer calibration process.

(4) Provide for a spectrometer calibration system and method that permits updating of spectrometer calibration methodologies without the need for software updates of the embedded spectrometer software.

(5) Provide for a spectrometer calibration system and method that provides an abstraction layer between the generation of peak shape profiles and the use of these profiles within the spectrometer analysis functions.

(6) Provide for a spectrometer calibration system and method that permits a data-driven calibration methodology to be applied to a spectrometer system.

While these objectives should not be understood to limit the teachings of the present invention, in general these objectives are achieved in part or in whole by the disclosed invention that is discussed in the following sections. One skilled in the art will no doubt be able to select aspects of the present invention as disclosed to affect any combination of the objectives described above.

**BRIEF SUMMARY OF THE INVENTION**

A spectrometer calibration system and method that permits a database of spectral peak shapes to be applied as basis template functions to characterize a radiation detector is disclosed. The disclosed system/method interpolates stored arrays representing a series of spectral peak shapes at a range of specified energies to enable formation of a calibration peak shape template at any desired spectral energy level. These basis functions may be generated from analytical functions and/or empirically measured spectral data and produce output shape calibration templates that are independent of the generation method for the basis templates. The disclosed system/method acts as an abstraction layer between the method of peak shape determination and the use of the peak shape basis functions in any subsequent spectroscopic analysis, permitting rapid and inexpensive spectrometer calibration updates without the need for any embedded spectrometer software modifications.

**BRIEF DESCRIPTION OF THE DRAWINGS**

For a fuller understanding of the advantages provided by the invention, reference should be made to the following detailed description together with the accompanying drawings wherein:

FIG. 1 illustrates a prior art block diagram of a typical spectrometer calibration system;

FIG. 2 illustrates a prior art flowchart illustrating a typical spectrometer calibration method incorporating embedded software updates and delays in updating same;

FIG. 3 illustrates an exemplary system application context in which the present invention is typically incorporated and depiction of some of the basic components of a spectroscopy system;

FIG. 4 illustrates an exemplary system block diagram of a preferred embodiment of the present invention;

FIG. 5 illustrates an exemplary method flowchart of a preferred embodiment of the present invention implementing an exemplary analytical/empirical calibration method;

FIG. 6 illustrates an exemplary method flowchart of a preferred embodiment of the present invention incorporating integrated analytic/empirical peak shape modeling;

FIG. 7 illustrates an exemplary method flowchart of a preferred embodiment of the present invention implementing an exemplary analytical calibration method;

FIG. 8 illustrates an exemplary method flowchart of a preferred embodiment of the present invention implementing an exemplary empirical calibration method;

FIG. 9 illustrates an exemplary calibration source spectrum and details of the waveform template structure as taught by the present invention;

FIG. 10 illustrates an exemplary resulting analytic calibration as taught by the present invention;

FIG. 11 illustrates an exemplary resulting empirical calibration as taught by the present invention;

FIG. 12 illustrates a prior art graph of alpha spectroscopy peaks fitted with an embedded software application;

FIG. 13 illustrates a present invention peak shape calibration fit of alpha spectroscopy peaks using an analytic function dataset;

FIG. 14 illustrates a present invention peak shape calibration fit of alpha spectroscopy peaks using an empirical dataset;

FIG. 15 illustrates a prior art graph of X-ray spectroscopy peaks fitted with an embedded software application;

FIG. 16 illustrates a present invention peak shape calibration fit of X-ray spectroscopy peaks using an analytic function dataset;

FIG. 17 illustrates a present invention peak shape calibration fit of X-ray spectroscopy peaks using an empirical dataset;

FIG. 18 illustrates a prior art graph of a CZT spectroscopy peak fitted with an embedded software application;

FIG. 19 illustrates a present invention peak shape calibration fit of a CZT spectroscopy peak using an analytic function dataset;

FIG. 20 illustrates a present invention peak shape calibration fit of a CZT spectroscopy peak using an empirical dataset;

FIG. 21 illustrates an overview of exemplary spectrometer calibration system/method major subsystems/subfunctions as taught by the present invention;

FIG. 22 illustrates exemplary analytical forms subsystem/subfunction processing;

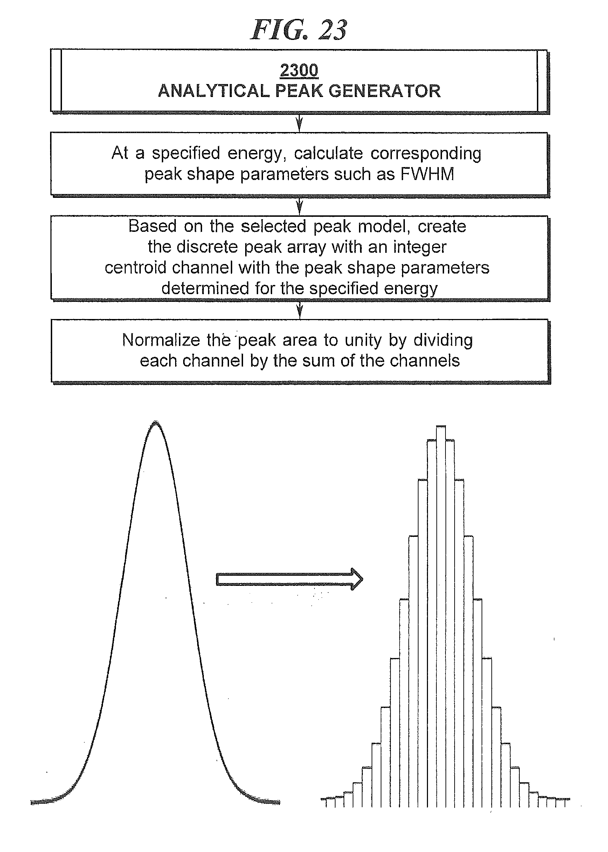

FIG. 23 illustrates exemplary analytical peak generator subsystem/subfunction processing;

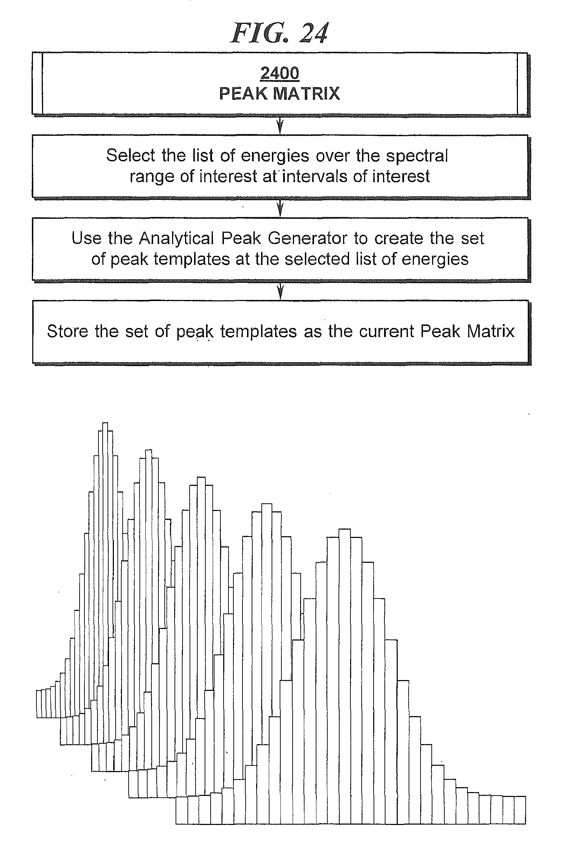

FIG. 24 illustrates exemplary peak matrix subsystem/subfunction processing;

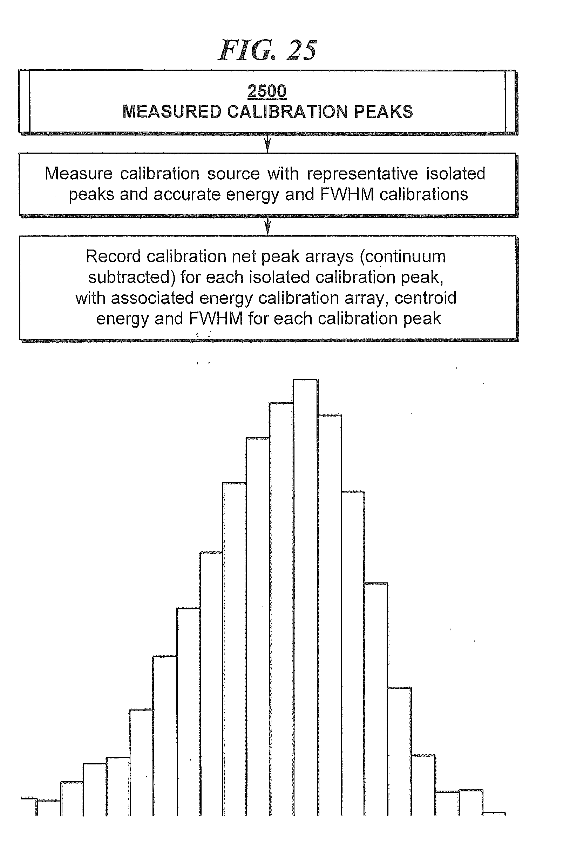

FIG. 25 illustrates exemplary measured calibration peaks subsystem/subfunction processing;

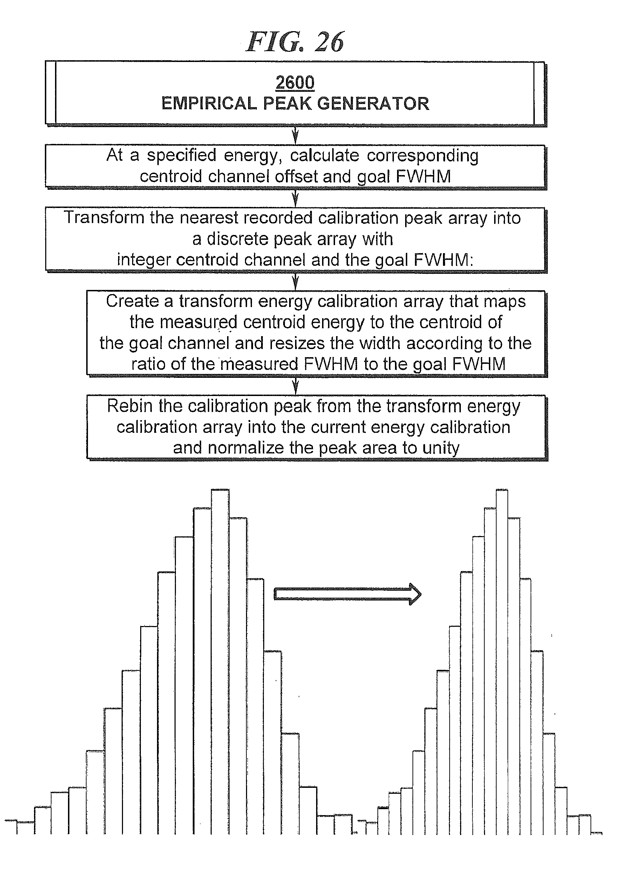

FIG. 26 illustrates exemplary empirical peak generator subsystem/subfunction processing;

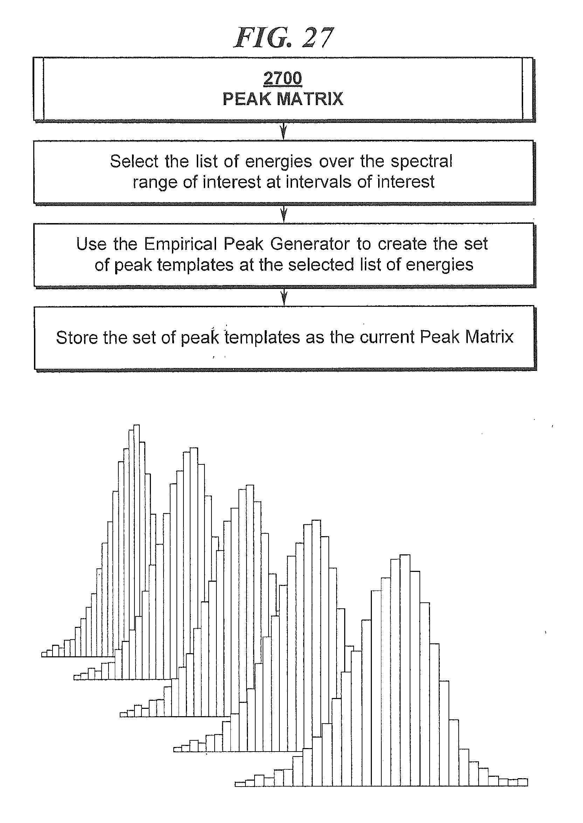

FIG. 27 illustrates exemplary peak matrix subsystem/subfunction processing;

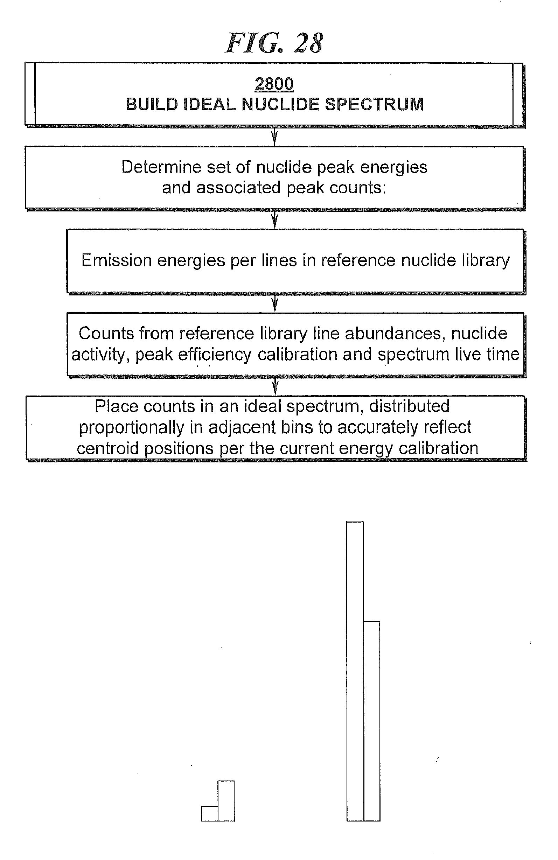

FIG. 28 illustrates exemplary ideal nuclide spectrum building subsystem/subfunction processing;

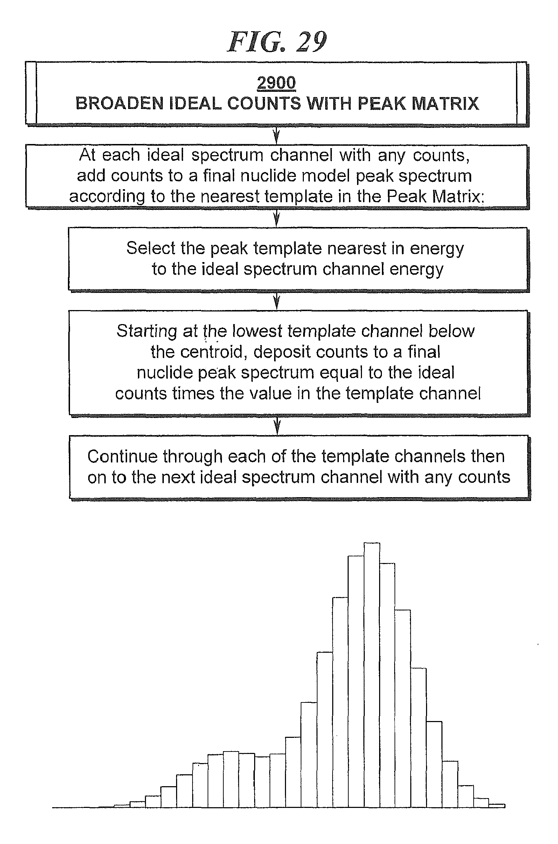

FIG. 29 illustrates exemplary broadening of ideal counts with peak matrix subsystem/subfunction processing;

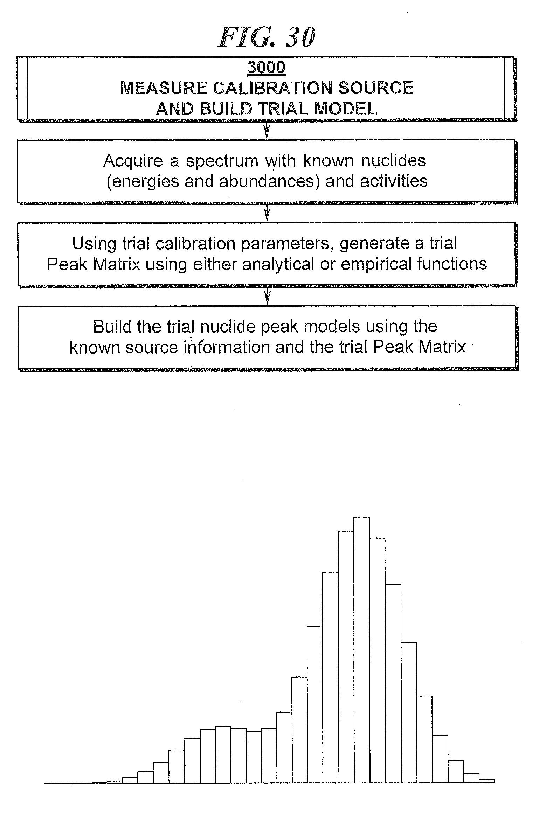

FIG. 30 illustrates exemplary measuring calibration source and building trial model subsystem/subfunction processing;

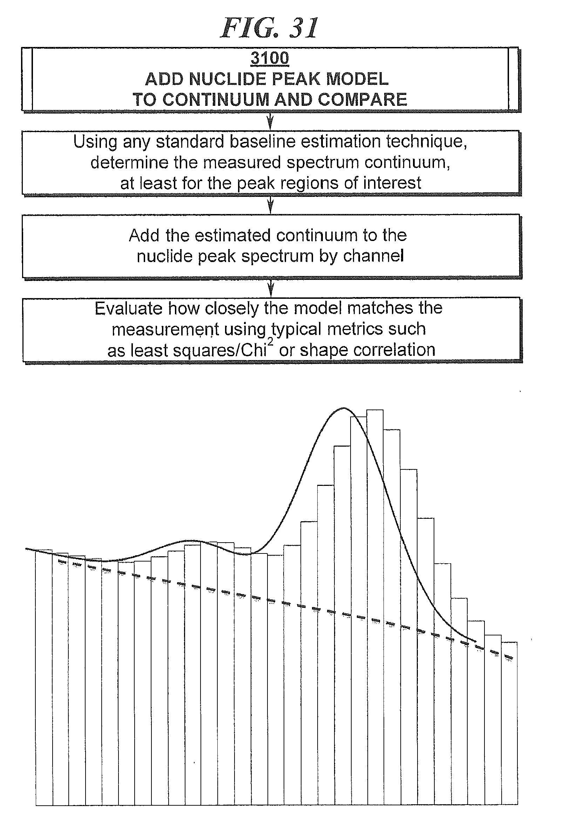

FIG. 31 illustrates exemplary adding nuclide peak model to continuum and comparison subsystem/subfunction processing;

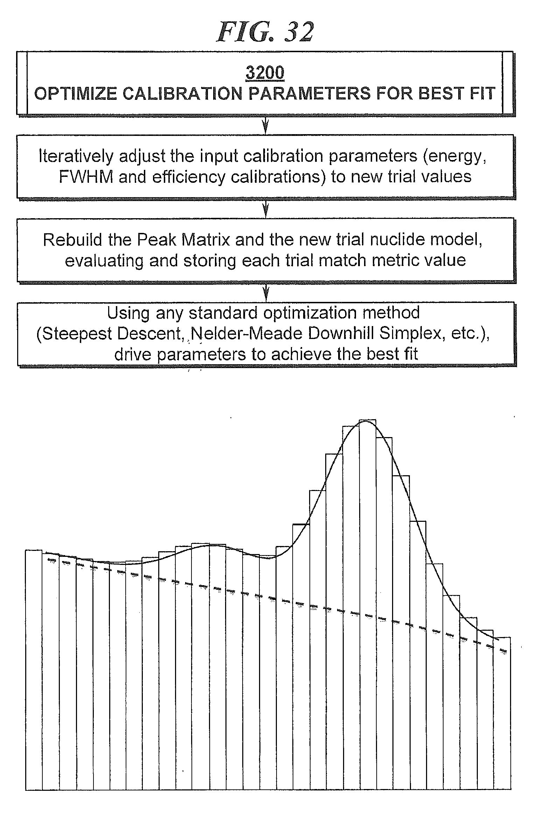

FIG. 32 illustrates exemplary optimizing calibration parameters for best fit subsystem/subfunction processing;

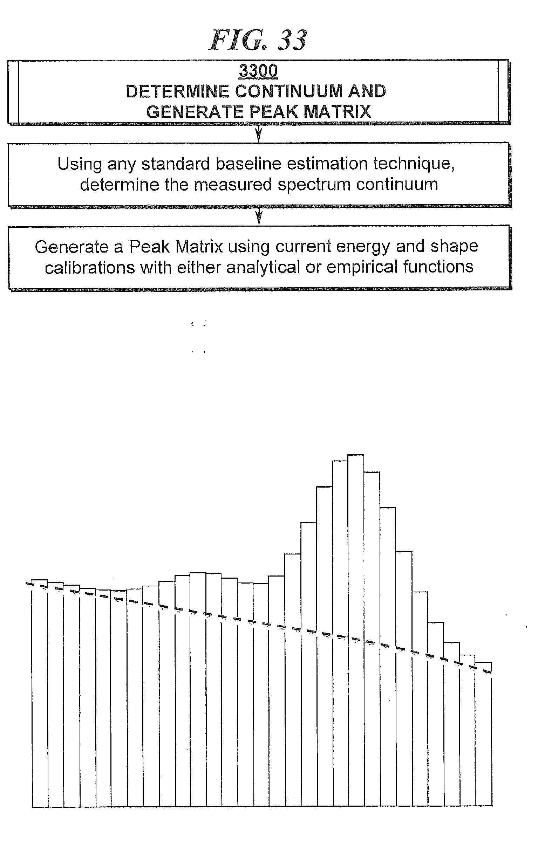

FIG. 33 illustrates exemplary determining continuum and generating peak matrix subsystem/subfunction processing;

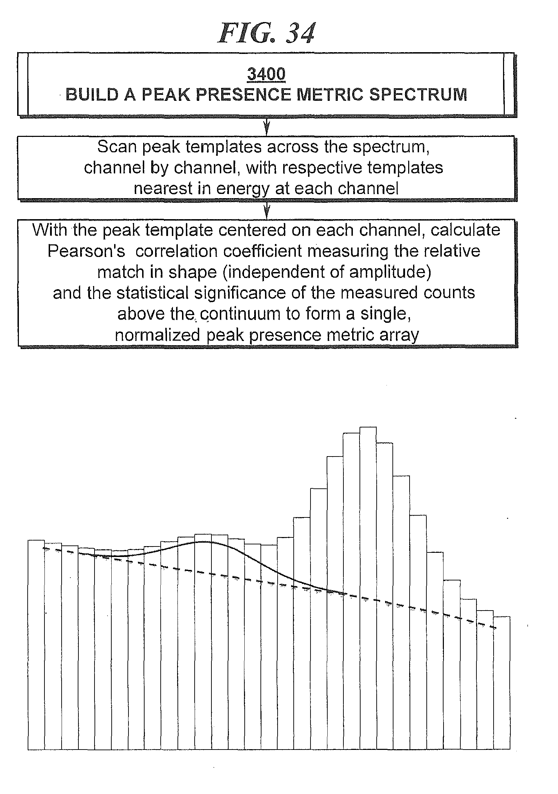

FIG. 34 illustrates exemplary building a peak presence metric spectrum subsystem/subfunction processing;

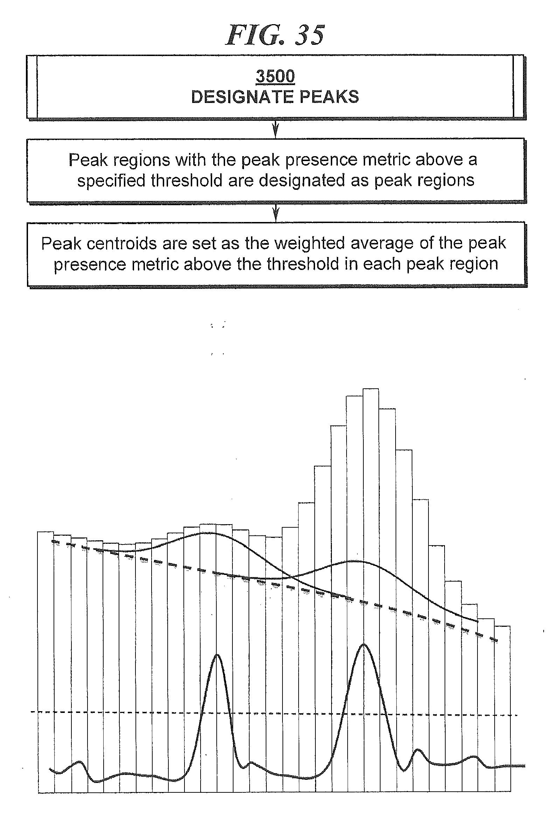

FIG. 35 illustrates exemplary designating peaks subsystem/subfunction processing;

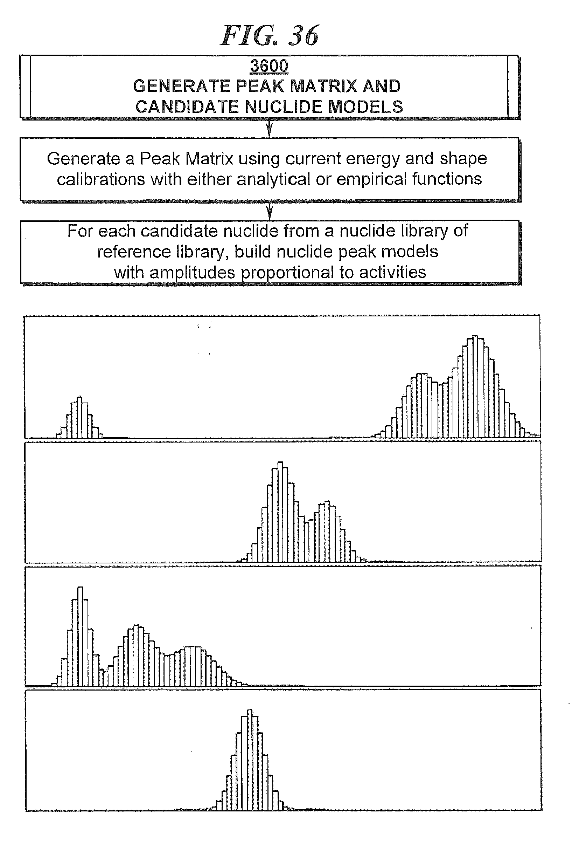

FIG. 36 illustrates exemplary generating peak matrix and candidate nuclide models subsystem/subfunction processing;

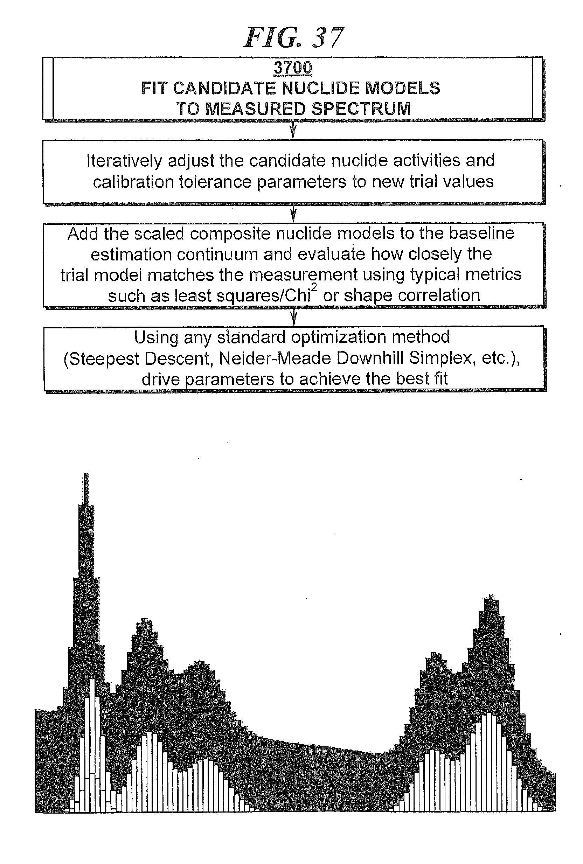

FIG. 37 illustrates exemplary fitting candidate nuclide models to measured spectrum subsystem/subfunction processing;

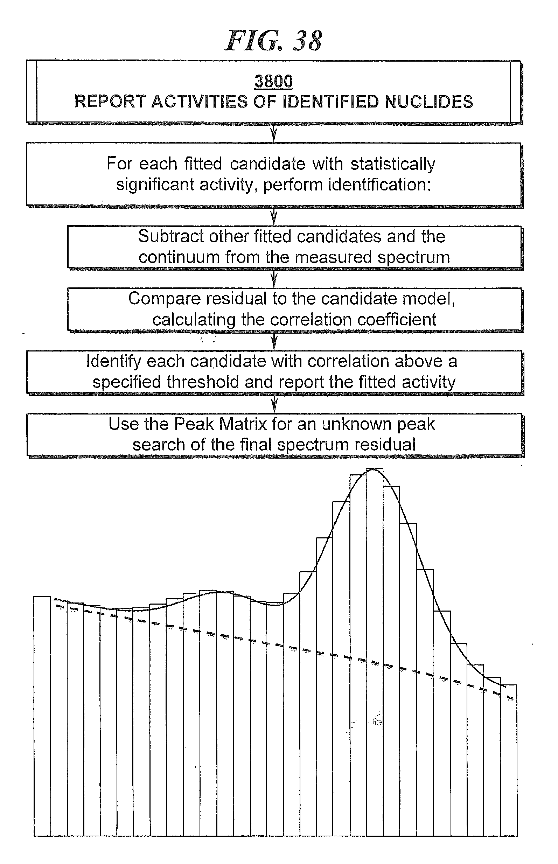

FIG. 38 illustrates exemplary reporting activities of identified nuclides subsystem/subfunction processing;

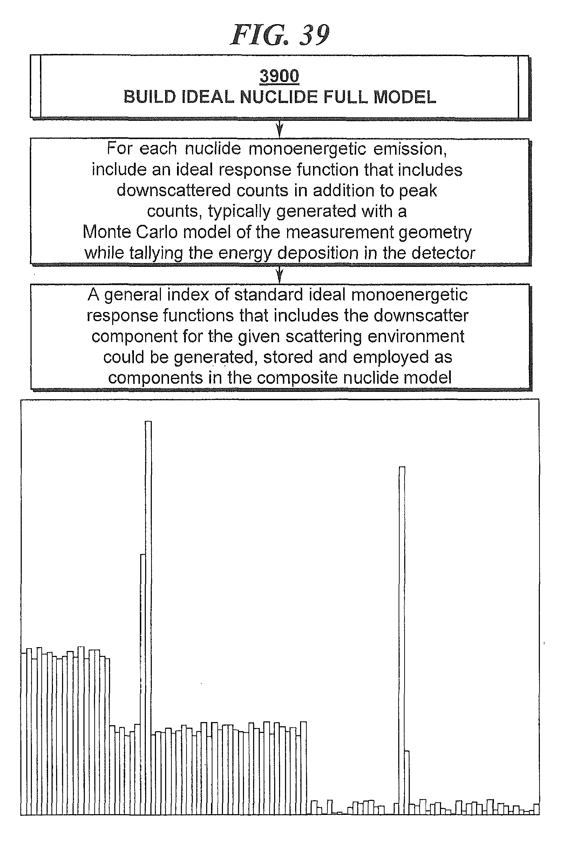

FIG. 39 illustrates exemplary building ideal nuclide full model subsystem/subfunction processing;

FIG. 40 illustrates exemplary broadening the ideal counts with peak matrix subsystem/subfunction processing.

## DESCRIPTION OF THE PRESENTLY PREFERRED EXEMPLARY EMBODIMENTS

While this invention is susceptible to embodiment in many different forms, there is shown in the drawings and will herein be described in detailed preferred embodiment of the invention with the understanding that the present disclosure is to be considered as an exemplification of the principles of the invention and is not intended to limit the broad aspect of the invention to the embodiment illustrated.

The numerous innovative teachings of the present application will be described with particular reference to the presently preferred embodiment, wherein these innovative teachings are advantageously applied to the particular problems of a **SPECTROMETER CALIBRATION SYSTEM AND METHOD.** However, it should be understood that this embodiment is only one example of the many advantageous uses of the innovative teachings herein. In general, statements made in the specification of the present application do not necessarily limit any of the various claimed inventions. Moreover, some statements may apply to some inventive features but not to others.

### Radiation Detector Not Limitive

As used herein, "radiation detector" means any spectroscopic radiation detector used or capable of use when conducting spectral analysis of radionuclides. This includes, but is not limited to, organic and inorganic scintillation detectors (NaI, $LaBr_3$, $SrI_2$, CsI, BGO, YSO, LSO, and the like), semiconductor detectors (HPGe, CZT, PbI, PIN diodes, PIPS, surface barrier, and the like) as well as gaseous detectors (proportional counters) suitable for spectroscopy. Moreover, "radiation detector" may also refer to combinations of the aforementioned detectors including hybrid systems of different component detector types.

### Universal Peak Shape Not Limitive

As used herein, "universal peak shape" means any data array or data structure used to represent an empirical dataset or analytic function associated with a spectroscopic radiation detector peak shape envelope. This term may in some cases be interchanged with the phrase "peak shape" depending on the context of the discussion herein.

### System/Method Context Overview (0300)

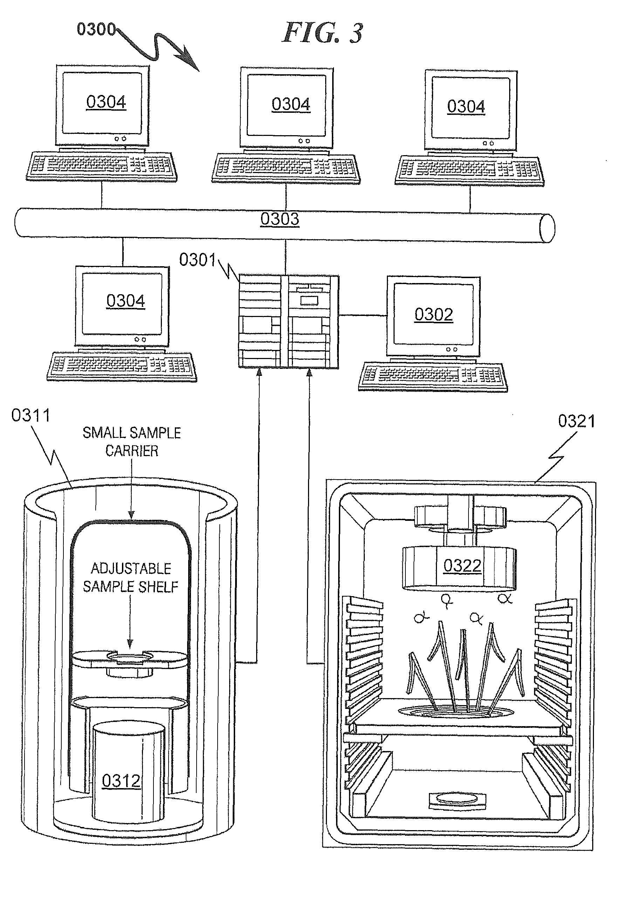

A typical application context for the present invention is generally illustrated in FIG. 3 **(0300),** wherein a graphical depiction of some of the basic components of a spectroscopy system are shown. Within this context, a counting chamber **(0311, 0321)** is provided, and includes a radiation detector **(0312, 0322)** that is appropriate for the type of radiation being measured. For example, alpha spectroscopy might require use of a passivated implanted planar silicon (PIPS) detector or the like, while gamma spectroscopy might require use of an HPGe detector or the like.

The detector **(0312, 0322)** output and signal conditioning circuitry generates a signal that is supplied to a multi-channel spectrum analyzer **(0301).** The analyzer **(0301)** contains a computing device capable of counting the detected radiation at various channel energies (or "bins") for subsequent spectral analysis. The analyzer device **(0301)** may include a dedicated user terminal **(0302),** or may be connected by a network **(0303)** to one or more remote user computing devices **(0304).** To utilize the spectroscopy system, a user inserts a calibration radionuclide of known energy emissions into the counting chamber where the radionuclide emissions are detected and counted by the analyzer **(0301).** Following calibration, the analyzer **(0301)** determines the energy distribution of emissions of a new source, applies the appropriate peak shape templates and other calibrations to analyze the radionuclide, and reports the results to one **(0302)** or more users **(0304).**

### System Overview (0400)

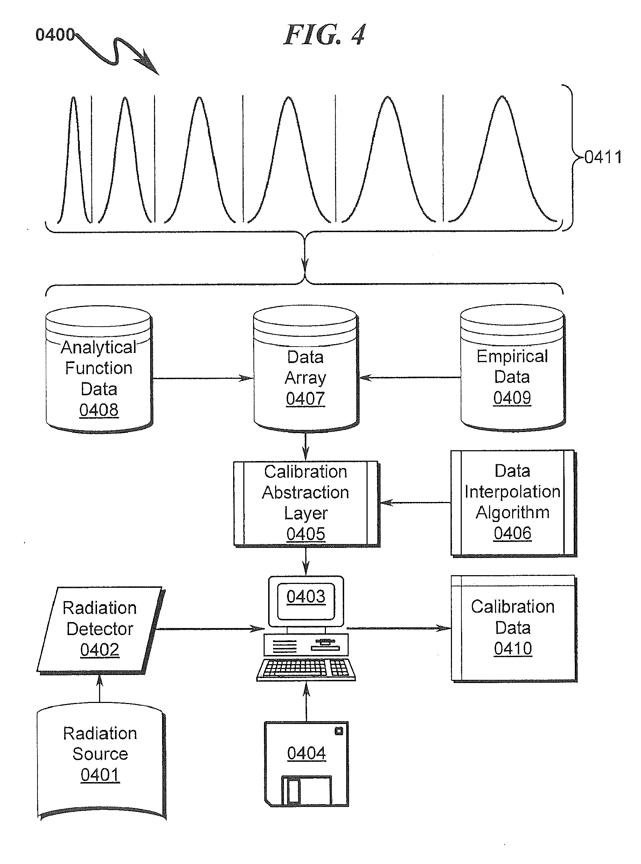

The present invention as it relates to a spectrometer calibration system in a preferred exemplary embodiment can typically be depicted as shown in FIG. 4 **(0400)** wherein the radiation source **(0401)** is detected with a radiation detector **(0402)** and processed by a computer system **(0403)** running under control of calibration software retrieved from a computer readable medium **(0404).** Within this context, software implementing a calibration abstraction layer **(0405)** implements a data interpolation algorithm **(0406)** to model peak shape functions using a variety of data source arrays **(0407)** that may be derived from analytic functions **(0408)** and/or empirical data **(0409).** The results of the calibration software **(0405, 0406)** is calibration data **(0410)** for the radiation detector **(0402).**

Note that in this system configuration the analysis software using the output calibration data **(0410)** need not be modified to deploy additional peak shape fitting models from either analytical function data **(0408)** or empirical data **(0409).** This represents a significant time and cost savings with respect to the maintenance and updating of the overall spectrometer analysis subsystem.

Within this system context, each of the major system components **(0402, 0403)** may have associated with it computer control systems running a variety of computer application programs and/or software that is retrieved from a computer usable medium **(0404)** having computer-readable program code means. The present invention does not limit the type of physical media on which this software may reside.

### Method Overview (0500)

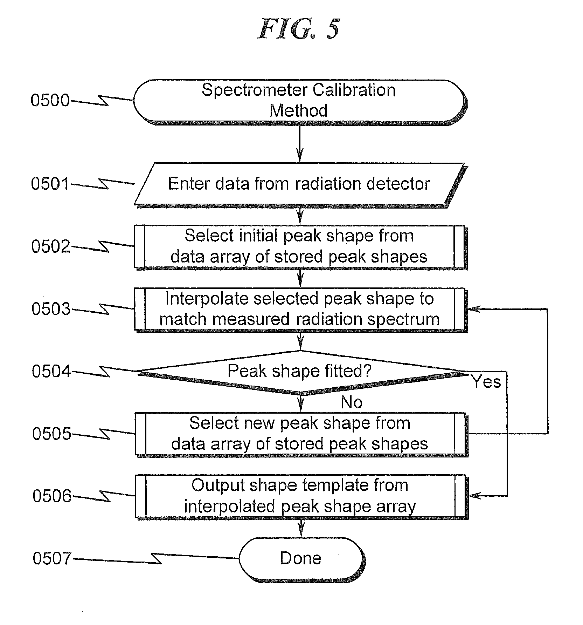

The present invention system described above may be utilized in conjunction with a method as generally described in the flowchart illustrated in FIG. 5 **(0500).** The steps in this spectrometer calibration method generally comprise:

(1) Data is entered from a radiation detector **(0501);**

(2) An initial peak shape matrix is generated **(0502);**

(3) Peak shape templates are drawn from the matrix to match the measured radiation spectrum peaks **(0503);**

(4) If the measured radiation spectrum peaks are properly fitted with the generated peak shapes, control is passed to step (6) **(0504);**

(5) Otherwise, a new peak shape matrix is generated with adjusted calibration parameters and control passes to step (3) **(0505);**

(6) Optimized calibration parameters used to generate the best fit calibration peak matrix and/or the optimized peak matrix itself are stored **(0506)** and

(7) The calibration method terminates **(0507).**

The significant advantage of this methodology is that the method of generating the calibration peak matrix has no bearing on how the peak matrix is used for analysis. Modifications/additions/deletions of the peak shape data arrays within this process are totally independent of the fitting software embedded within the spectrometer analysis subsystem that draws upon the peak matrix. Rather than supporting a plethora of different analytic mapping functions within the envelope fitting software of the analysis subsystem, a unified and simpler data driven system permits any number of peak shapes to be mapped to the measured radiation detector data without any need for software modifications.

This general method may be modified heavily depending on a number of factors, with rearrangement and/or addition/deletion of steps anticipated by the scope of the present invention. Integration of this and other preferred exemplary embodiment methods in conjunction with a variety of preferred exemplary embodiment systems described herein is anticipated by the overall scope of the present invention.

**Calibration Methodology**

Traditional radiation spectroscopy system peak shape calibrations are defined as one or more energy dependent analytical functions. For example a Gaussian full width at half maximum (FWHM) characteristic might take the form:

$$\text{FWHM} = \text{Offset Coefficient} + \text{Slope Coefficient} \times \sqrt{\text{Energy}} \qquad (1)$$

While an additional low energy tailing feature might take the form:

$$LowTail = \text{OffsetCoefficient} + \text{SlopeCoefficient} \times Energy \qquad (2)$$

In this case, the peak model is a Gaussian function with a tail on the lower energy side of the peak, with the form:

$$
\begin{aligned}
\text{Peak}(k) &= \text{Amplitude} \times e^{-\left(\frac{(k-\text{Centroid})^2}{2\times\left(\frac{\text{FWHM}}{2.355}\right)^2}\right)}, \text{ for } k > (\text{Centroid} - \text{LowTail}) \\
&= \text{Amplitude} \times e^{\left(\frac{\text{LowTail}\times(2\times k - 2\times\text{Centroid}+\text{LowTail})}{2\times\left(\frac{\text{FWHM}}{2.355}\right)^2}\right)}, \text{ for } k < (\text{Centroid} - \text{LowTail})
\end{aligned}
\qquad (3)
$$

One of ordinary skill will appreciate that other analytical functions may be utilized and are within the scope of the present invention. For example, Lorentzian broadening and alternative tailing functions may also be utilized depending on the detector response being modeled.

To create a model of a peak at a specified energy, the energy/centroid and calibrated coefficient values are used to calculate the characteristic FWHM and Low Tail values to render the shape that is then scaled to the desired amplitude. During calibration, the source nuclides and corresponding peak energies are known. The peak shape calibration coefficients are then optimized to achieve the best fit to the measured spectrum peaks at the calibration source energies. The forms of the FWHM and Low Tail functions allow for interpolation to other energies in future analyses. Future analyses of unknown source peaks must then also use these calibration and peak shape models. Other analytical forms of more or less complexity have been used historically, but always with the analysis needing to incorporate an understanding of the form of the calibration model.

The Universal Peak Shape calibration approach of the present embodiment encapsulates this approach using a generic abstraction layer. Rather than storing the peak shape calibration as a set of calibrated coefficients for analytical functions used by a given peak model, the calibrated peak shapes are generated at calibration time and stored as a matrix of peak shape templates that span the range of energies of interest. During calibration, any set of analytical peak models can be optimized against the measured source calibration data. Then the optimized model is used to generate peak templates at small intervals across the energy range. Future analyses of unknown source peaks can then draw upon these templates to generate model peaks without needing to know what analytical forms or models were used during calibration. In fact, the calibration process does not need to rely directly on analytical models, but can record the measured calibration peaks and use these to generate the peak templates more directly. This empirical approach does require methods of initially isolating and specifying the measured peaks and for creating templates interpolated from the relatively sparse calibration peaks, typically via analytical models. Indexing of matrices to acquire model peaks requires significantly less computational power than repeated calculation of analytical functions during analysis of a radionuclide.

## Exemplary Embodiment Illustration (0600,0700,0800)

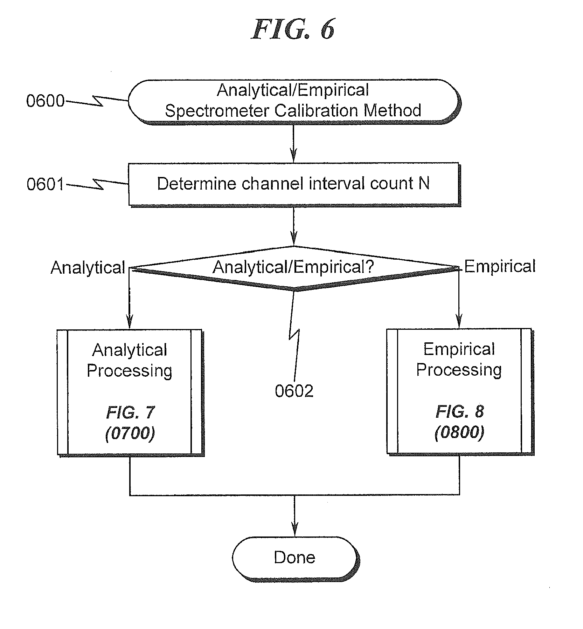

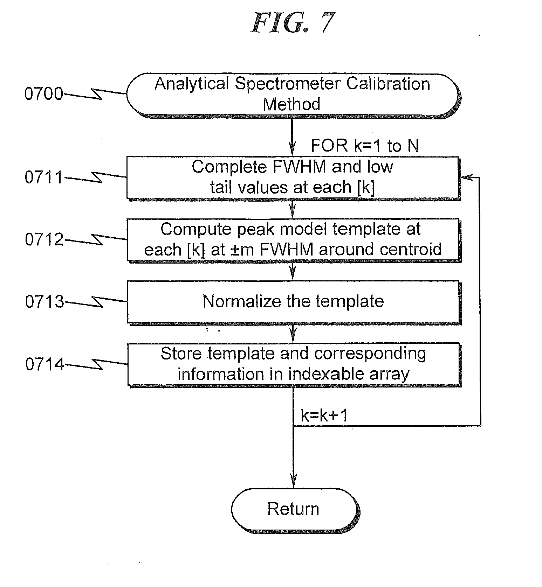

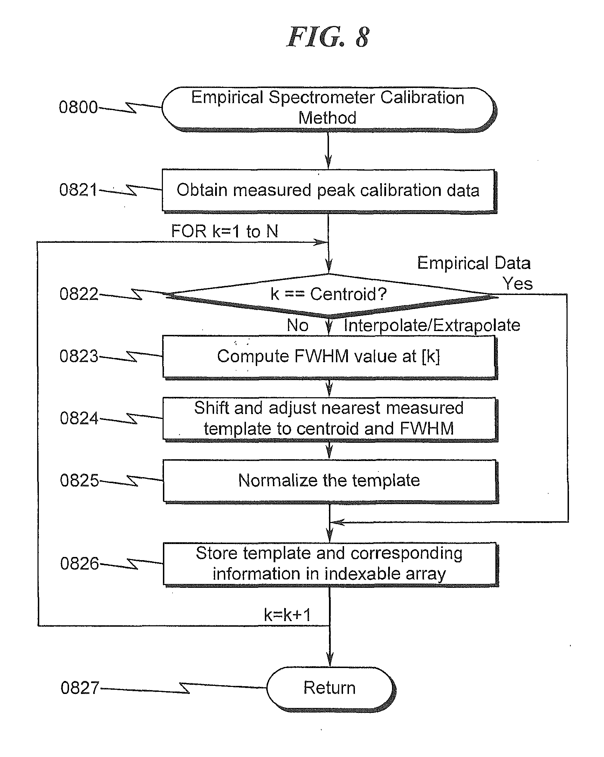

The present invention feedback system described above may be utilized in conjunction with a method as generally described in the flowchart illustrated in FIG. 6 **(0600),** FIG. 7 **(0700),** and FIG. 8 **(0800).** The method steps in this spectrometer calibration system are described below.

### *Analytical Model Support*

To illustrate this calibration concept, a concrete example will be described using the analytical functions of equations (1), (2) and (3) above. In this exemplary embodiment, as depicted in FIG. 6 **(0600),** peak templates are generated at intervals of 1% up to the maximum channel **(0601).** First, if this is an analytical model **(0602),** the energy at the channel of each interval is input to equations (1) and (2) to provide the FWHM and Low Tail values **(0711).** Next, the FWHM, Low Tail and Centroid are input to equation (3) to calculate the peak model for Amplitude of 100 at each channel ranging between $\pm$ 3 FWHM of the Centroid **(0712).** The total integral area of the peak template is tallied and used to normalize the template by dividing each channel by this integral **(0713).** Finally, in addition to the array of floating point numbers stored for each template, the index and energy of the centroid channel in the template are stored **(0714).** The energy calibration associated with the peak shape calibration is also archived to allow rebinning the templates to other energy calibrations in the future (perhaps after a gain shift) **(0714).** The coefficients of equations (1) and (2) can then be optimized by fitting peak models derived from the peak templates against a measured spectrum of a known calibration source.

Generating analysis peak models with the universal peak shape calibration can be done by shifting the template nearest in energy to match the centroids and then add each normalized template channel multiplied by the analysis peak area, across the range of template channels. Plots of a portion of the template arrays may appear generally like the waveform **(0411)** depicted in FIG. 4 **(0400),** where six different peak shape template models are shown. Each normalized peak shape template entry into the array also includes the centroid channel, centroid energy and energy calibration information for the given entry.

The universal peak shape calibration is unique in the manner of storing and applying peak shape calibrations by drawing from a series of representative arrays. This added layer of abstraction enables nearly effortless switching between alternative analytical or empirical peak models, not possible using current methods. The best peak model for a given application can be flexibly employed. Enabling the assumption-free approach of the empirical peak recordings to serve as the basis templates may also reduce any systematic errors inherent in the analytical approximations and allow for the previously prohibited use of measurement systems with multi-modal responses.

This general method may be modified heavily depending on a number of factors, with rearrangement and/or addition/deletion of steps anticipated by the scope of the present invention. Integration of this and other preferred exemplary embodiment methods in conjunction with a variety of preferred exemplary embodiment systems described herein is anticipated by the overall scope of the present invention.

### *Peak Shape Data Structures*

The primary data structure needed to implement the universal peak shape calibration embodiment is a collection of programmed arrays that may be indexed by the analyzer computing device at runtime. In this embodiment, each array represents the channel-wise expected shape of a system monoenergetic response, typically at least several FWHM wide. Each array also has properties indicating the centroid channel, integral area (normalization factor) and FWHM value. For speed, these arrays are typically generated initially as soon as the data source is loaded and then the stored/ banked shapes are indexed accordingly. Changes in the energy or shape calibration require reconstruction of the representative arrays.

The density of arrays is variable with respect to each implementation, but the present embodiment uses 100 arrays, one for each percent of channels. The nearest indexed array is used as an approximation of the expected peak shape profile, so the array density offers a trade-off between efficiency and accuracy. Generating these representative arrays is relatively simple for analytical models, with each array channel calculated directly from a selected mathematical function.

### *Empirical* Dataset *Modeling*

Referencing the flowchart of FIG. 8 **(0800)** as it relates to empirical models, the starting point is a set of measured calibration peak arrays, stored as a part of the empirical calibration **(0821).** These measured peak profiles are derived from the calibration spectrum by specifying the regions of interest with centroid channel/energy **(0822)** and FWHM - this might be done using a peak search engine driven by an initial analytical model (bootstrapping), manual designation or library driven regions of interest. Once these measured arrays are available, the full set of representative peak arrays are formed by interpolating or extrapolating from the measured arrays. This approximation is done in the present embodiment using a standard FWHM calibration **(0823).** Each representative array uses the nearest measured array, rebinning the counts to shift from the measured FWHM to the calculated FWHM **(0824)** and normalized **(0825)** then stored **(0826).**

The peak templates are then stored **(0826)** in an indexable array for subsequent use. The present embodiment also allows capture of the measured peaks and use of these as peak-shape templates for an empirical peak-shape calibration. The method learns the spectroscopic system response by analyzing the calibration source measurement and, knowing where the peak energies lie, isolating those peak responses and using the peak responses as templates.

### System/Method Example Application (0900,1000,1100)

The present invention may be more fully understood in some contexts by reference to a specific application example. The following is a specific example illustrating the details of how the new peak shape calibration is implemented. For this example, a Hyper Pure Germanium (HPGe) detector is used. The steps associated with this method are as follows:

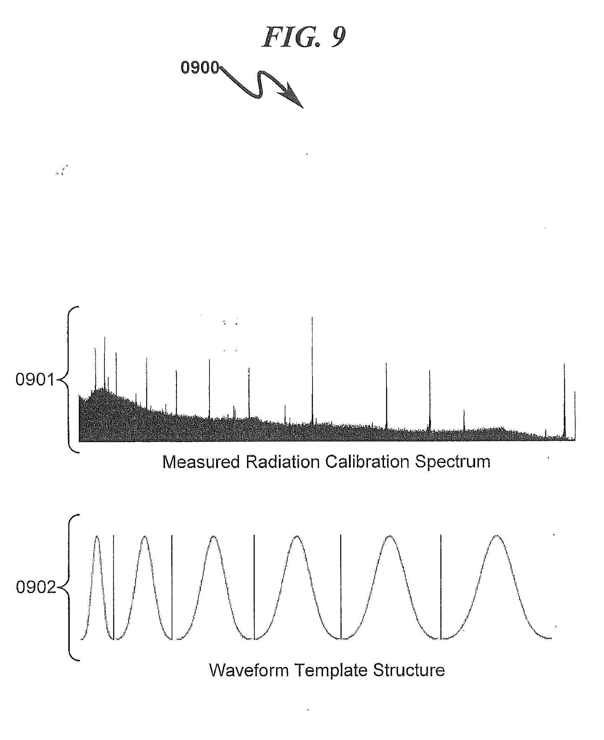

- **STEP 1.** A calibration spectrum or energy histogram is acquired with the measurement system exposed to a calibration source emitting known energies. In this case, the calibration source included $^{109}$Cd, $^{57}$Co, $^{137}$Cs, $^{60}$Co, and $^{88}$Y with monoenergetic emissions including those at approximately 88, 122, 662, 898, 1173, 1332 and 1836 keV. This calibration source spectrum **(0901)** is generally illustrated in FIG. 9 **(0900).**

- **STEP 2.** Initialize energy and full width at half maximum (FWHM) calibration coefficients. These coefficients may be default values or taken from a previous calibration as the best estimate of the current conditions.

    ○ Energy(channel) = 10.2 + 0.4567*channel

    ○ FWHM(energy) = 0.921+0.0387*sqrt (energy)

- **STEP 3.** Generate peak shape templates indexed by energy using a simple Gaussian analytical function. ○ Using the initial energy and FWHM calibration functions, an initial set of peak shape templates are generated to form a peak shape calibration. A list of arrays (floating point) is created with each array representing the normalized peak templates occurring at an indexed energy. For this example, the energy intervals occur at every one percent of the spectrum, yielding a list of 100 evenly spaced templates across the spectrum energy range. At each interval, the energy and FWHM are determined from the calibration functions. The FWHM value is converted from units of energy to units of channels. For this example, each peak template takes the form of a Gaussian function centered at the centroid channel for the specified energy with an associated FWHM:

$$Amplitude(channel) = Height \times e^{\left[ \frac{-(channel - centroid)^2}{2 \times \left( \frac{FWHM}{2.355} \right)^2} \right]}$$

Any analytical function of interest may be used as an alternative to this Gaussian form. Each template is created by initializing an array that is long enough to ensure all of the significant function features of interest are included. In this example, an initial range of $\pm$ 10 FWHM is used. The previous Gaussian equation is used to calculate the amplitude of the function at each of the channels, given the template centroid channel and FWHM values. By convention, the Height is set to 100. The left and right tails of the function are truncated where they fall to relatively negligible values. The tally of all the remaining channel values is used to normalize the template by dividing each channel by this total area sum. At each of the energies, the template array and centroid channel in the template are stored as a list. Reference an exemplary template array **(0902)** as generally illustrated in FIG. 9 **(0900).**

- **STEP 4.** Build a trial calibration source model for comparison to the measured spectrum.

○ Perform baseline estimation to represent the continuum underlying the peaks in the spectrum. This can be done in a variety of ways, including peak erosion and region of interest. Peak erosion acts as a smoothing filter tuned to suppress spectral features with calibrated peak widths. For this calibration, with known energies of interest, continuum channels to the left and right of peak regions can also be used to interpolate with a linear or step function.

○ Add calibration source peak models to the baseline continuum at the expected source energies.

■ Initialize peak areas to net peak counts by summing the measured spectrum counts above the continuum in the associated peak region of interest. Alternatively, the initial peak areas can be initialized to values expected given an understanding of the measurement system efficiency, the calibration source activities, emission abundances and counting time.

■ Add peak area counts at spectrum centroid bins in a temporary spectrum array. Split the counts into the two adjacent bins that bound the specific centroid energy proportionally so that the linearly weighted centroid channel matches the emission energy. If the emission energy occurs exactly half way between two adjacent bin energies, the two bins will be populated with half the peak counts each.

■ Broaden the peak counts in each bin. Channel by channel, redistribute the model peak counts from the temporary spectrum array into a peak model spectrum according to the nearest peak shape template. Determine the index of the nearest stored peak shape template and align the template centroid with the current channel. For each channel in the template, add counts to the associated peak model spectrum equal to the current value in the temporary spectrum channel times the value in the associated normalized template channel. If temporary spectrum channel 425 has 100 counts in it and the template has a value of 0.18 two channels below the centroid, then channel 423 of the peak model spectrum will get 18 counts added to it.

■ Add the final, broadened peak model spectrum to the previously established baseline continuum by channel, producing the full trial model spectrum.

- **STEP 5.** Optimize calibration coefficients and peak amplitudes.

  ○ Evaluate the quality of the model fit to the measured spectrum. Use a standard fit metric such as $Chi^2$, but include only those spectral regions with non-negligible peak model contributions.

  o Repeat STEPS 2 through 4 iteratively while adjusting the calibration coefficients and peak area values. A wide variety of optimization schemes can be used to more efficiently drive the parameter values to their best values that minimize the fit metric. Examples include a grid search, steepest descent, simulated annealing, particle swarm optimization, Nelder-Meade downhill simplex and Quasi-Newton or Levenberg-Marquardt with finite step gradients. During the optimization, it is prudent to bound the parameters to reasonable values to converge more quickly to the best values while avoiding local minima.

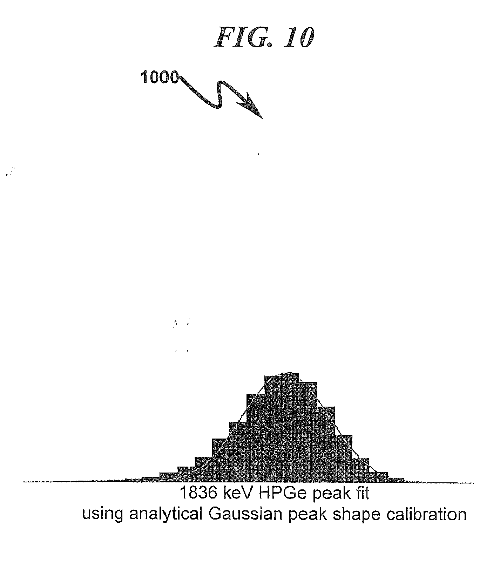

- **STEP 6.** While the simple Gaussian peak model fit **(1000)** (as generally illustrated in FIG. 10 **(1000))** may be sufficient in some cases, it may not adequately represent the peak response for some measurement systems. HPGe systems sometimes have low energy tailing. This can easily be accommodated with a low tail calibration function and a corresponding method to generate the templates with the low tail included in STEPS 2 and 3. However, this new peak shape calibration method can alternatively use empirical peak shape templates derived directly from the calibration spectrum.

- **STEP 7.** The empirical peak shape calibration starts with a reasonably good standard analytical calibration, as described previously. Suitable peaks in the measured calibration spectrum are selected, with good statistics and without interferences. These selections can be made manually with an appropriate user interface, or with automatic selection rules. Such rules might include a tolerance limit for separation of adjacent peaks or limits on the allowable relative residuals after fitting with the initial analytical calibration.

- **STEP 8.** The selected measured peaks are stored as calibration peaks. The peak array (net counts above the continuum) in the peak region is stored along with the associated energy calibration array for the same channels, the centroid energy and FWHM.

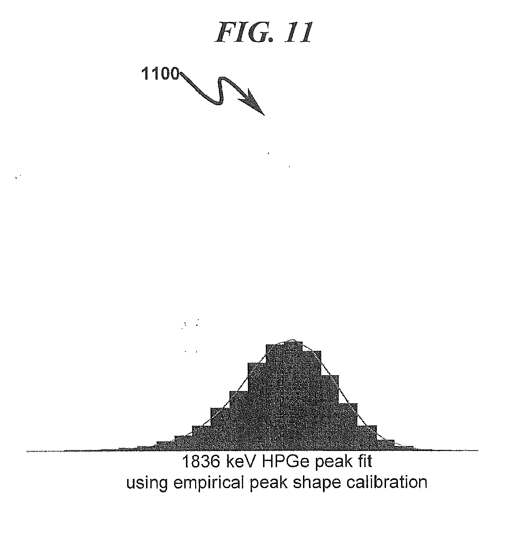

- **STEP 9.** The peak shape templates previously generated from an analytical function in STEP 3 will now instead be generated using the stored calibration peaks. Again a list of arrays is created with each array representing the normalized peak templates occurring at an indexed energy. At each percent of the spectrum range, the energy and FWHM are determined from the calibration functions, as before. The stored calibration peak nearest in energy is selected and used to produce each template. The selected calibration peak array is transformed to convert the stored peak array to match the goal template FWHM and to set the centroid at the middle of the template centroid channel. The centroid channel offset and the ratio of the stored calibration peak FWHM to the goal template FWHM are used to create a transform energy calibration. The stored calibration peak array counts are mapped from the transform energy calibration onto the current spectrum energy calibration. The rebinned output template peak array is then also normalized by tallying the total peak counts and dividing each channel by this sum. At each of the template energies, the template array and centroid channel in the template are stored as a list. An example of this empirical fit result **(1100)** is generally illustrated in FIG. 11 **(1100).**

- **STEP 10.** The new list of peak templates derived from the measured calibration peaks can then be used in practice to build trial source models as per STEP 4, without any difference from the templates derived from analytical functions.

While the above example is only illustrative of one methodology taught by the present invention, one skilled in the art will readily understand that this example may be applied differently in a wide variety of radiation detector calibration contexts.

### Exemplary Alpha Spectroscopy Calibration (1200,1300,1400)

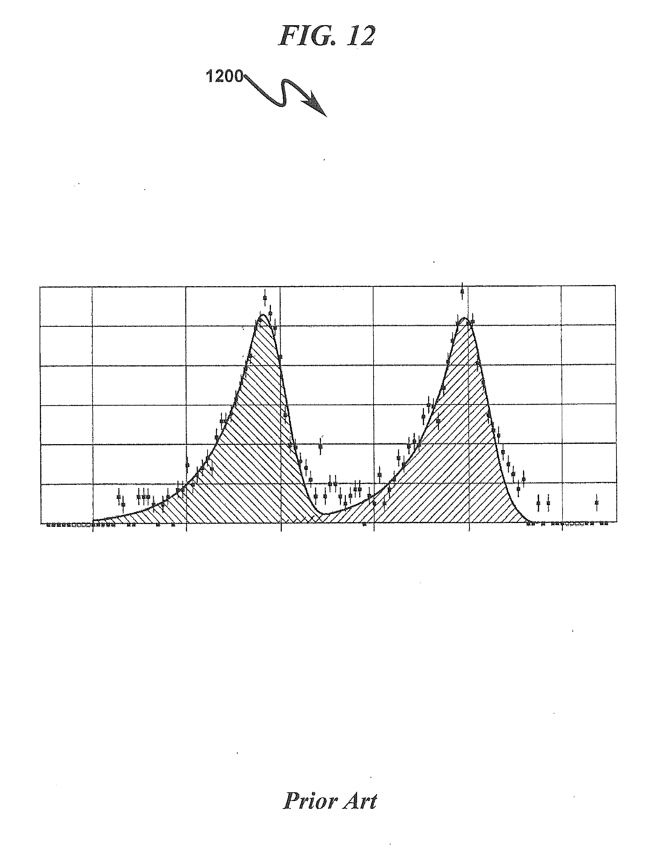

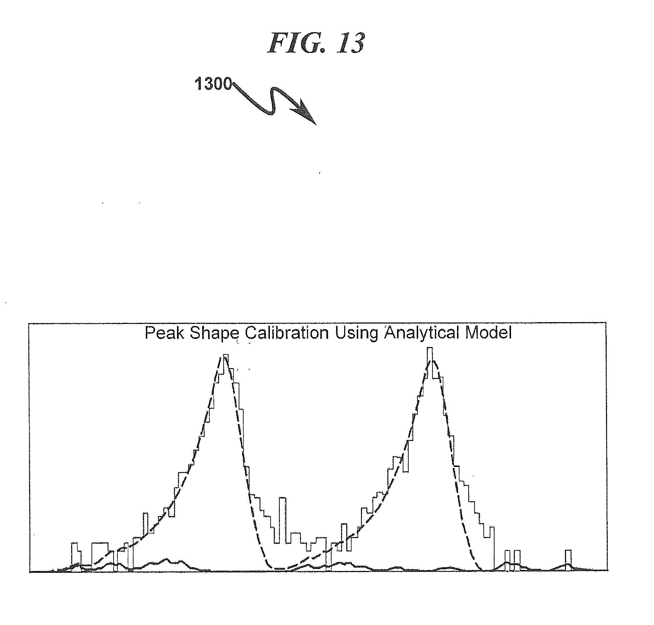

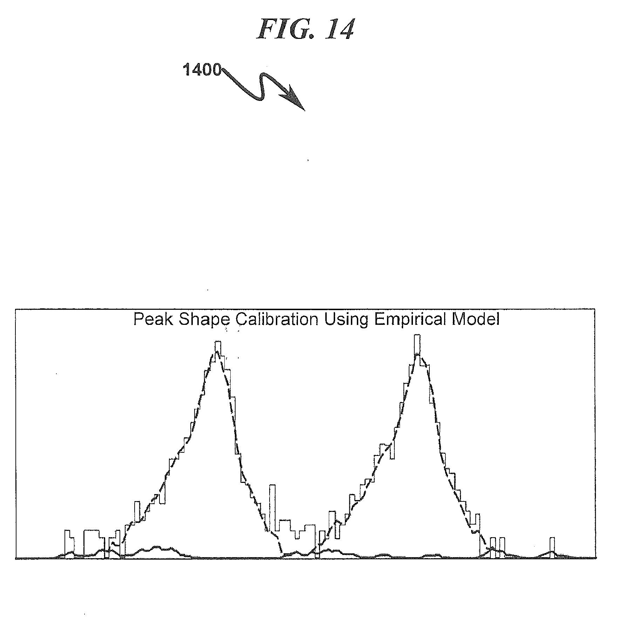

Examples of the prior art and present invention as applied to the calibration of typical alpha radiation peak shapes is generally illustrated in FIG. 12 **(1200),** FIG. 13 **(1300),** and FIG. 14 **(1400).** FIG. 12 **(1200)** depicts a graph of alpha spectroscopy peaks and illustrates the traditional method of peak shape calibration. The graph **(1200)** depicts a standard peak shape model computed using standard prior art fitting methods. FIG. 13 **(1300)** depicts a peak shape rendered through the methods of a preferred embodiment of the present invention using analytical models. FIG. 14 **(1400)** depicts a peak shape rendered through the methods of the present invention using an empirical peak model. As shown, both analytical **(1300)** and empirical **(1400)** methods present an accurate estimation of the measured energies of the nuclide.

### Exemplary X-Ray Spectroscopy Calibration (1500,1600,1700)

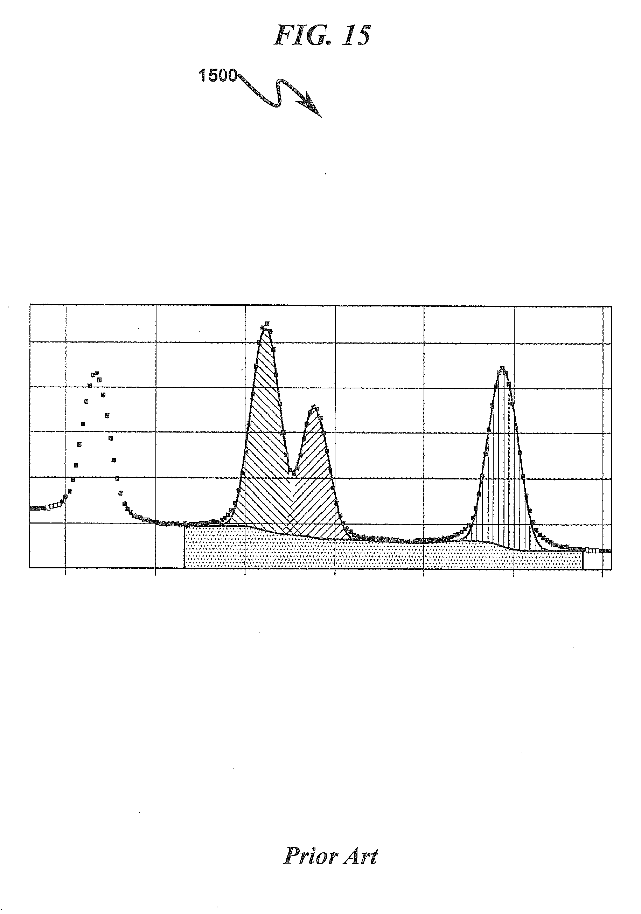

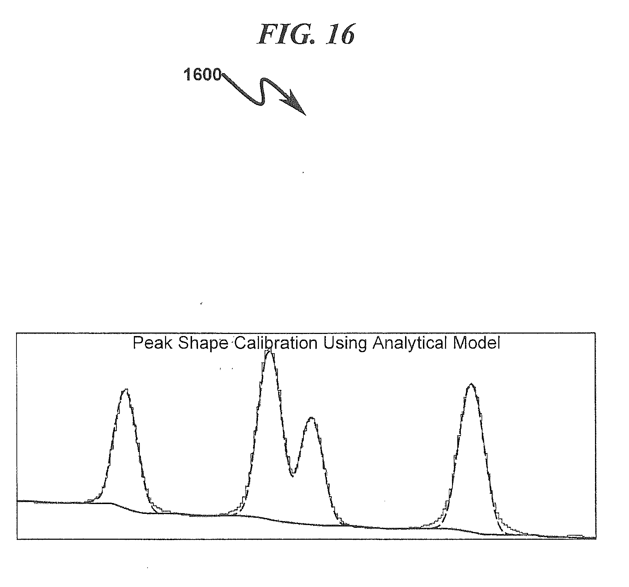

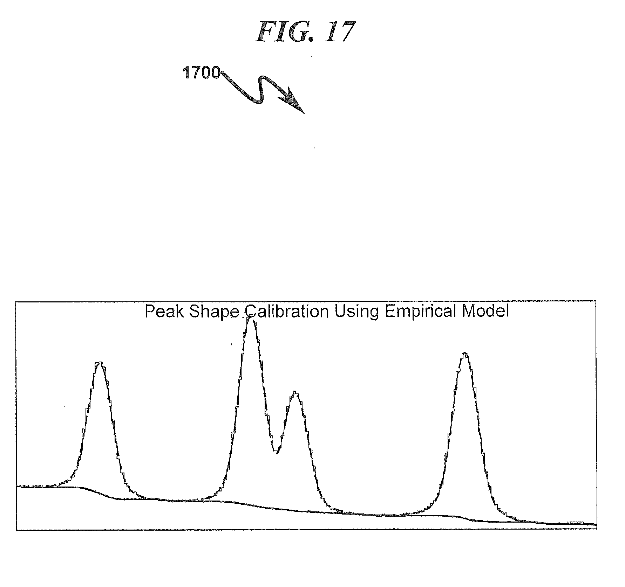

Examples of the prior art and present invention as applied to the calibration of typical X-ray radiation peak shapes is generally illustrated in FIG. 15 **(1500),** FIG. 16 **(1600),** and FIG. 17 **(1700).** FIG. 15 **(1500)** depicts a graph of X-ray spectroscopy peaks and illustrates the traditional method of peak shape calibration. The graph **(1500)** depicts a standard peak shape model computed using standard prior art fitting methods. FIG. 16 **(1600)** depicts a peak shape rendered through the methods of a preferred embodiment of the present invention using analytical models. FIG. 17 **(1700)** depicts a peak shape rendered through the methods of the present invention using an empirical peak model. As shown, both analytical **(1600)** and empirical **(1700)** methods present an accurate estimation of the measured energies of the nuclide.

### Exemplary CZT Spectroscopy Calibration (1800,1900,2000)

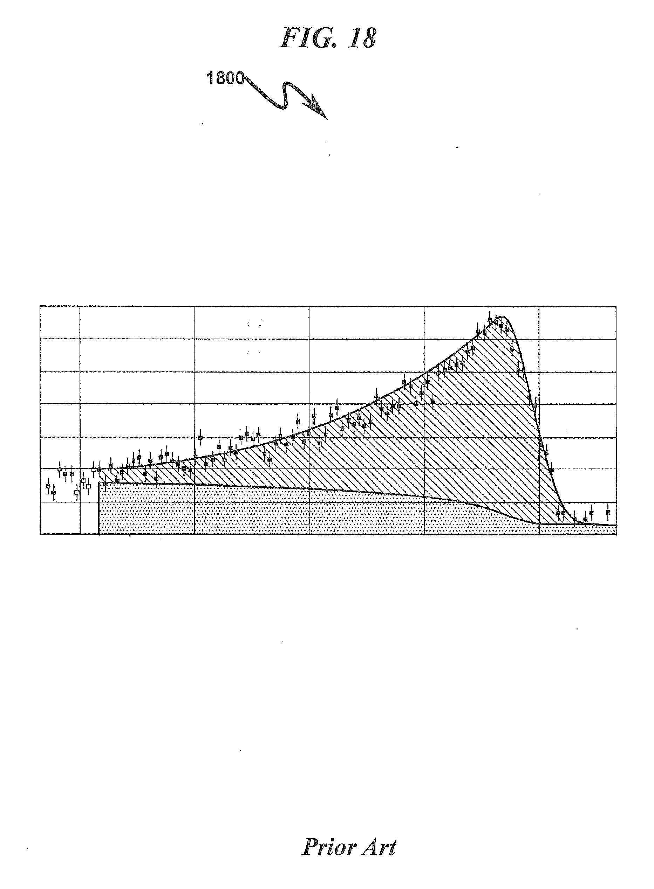

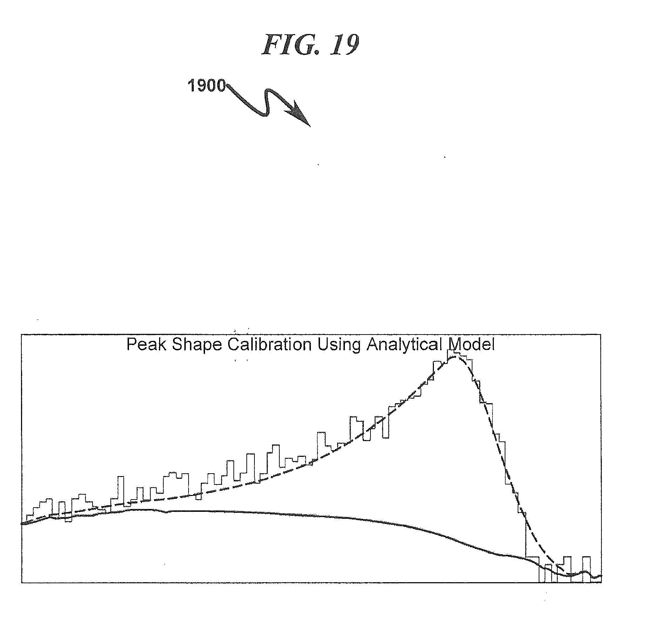

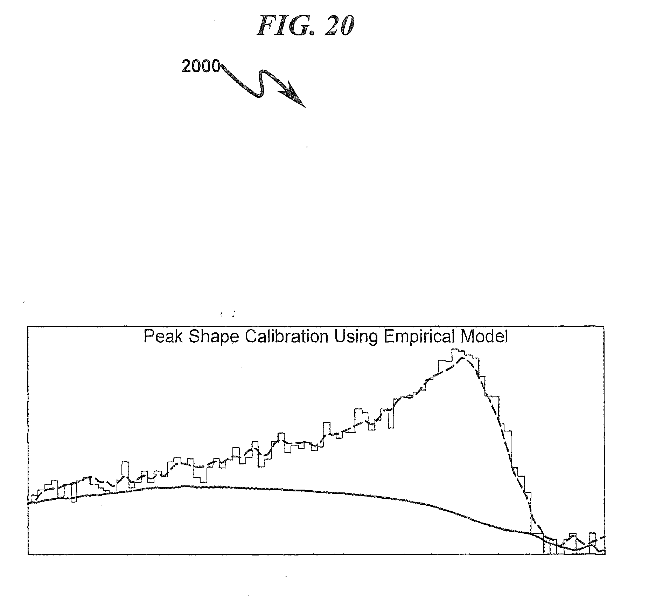

Examples of the prior art and present invention as applied to the calibration of typical CZT radiation peak shape is generally illustrated in FIG. 18 **(1800),** FIG. 19 **(1900),** and FIG. 20 **(2000).** FIG. 18 **(1800)** depicts a graph of a CZT spectroscopy peak and illustrates the traditional method of peak shape calibration. The graph **(1800)** depicts a standard peak shape model computed using standard prior art fitting methods. FIG. 19 **(1900)** depicts a peak shape rendered through the methods of a preferred embodiment of the present invention using analytical models. FIG. 20 **(2000)** depicts a peak shape rendered through the methods of the present invention using an empirical peak model. As shown, both analytical **(1900)** and empirical **(2000)** methods present an accurate estimation of the measured energies of the nuclide.

### Energy Peak Location

With an array of peak template shapes that may be readily indexed, it is possible to perform numerous functions. For example, the measured energy spectrum may be scanned using universal peak shape templates to locate energy peaks within the spectrum. Energy peaks may then be located where the combination of statistically significant net counts and shape correlation exceed a given threshold. Further, universal peak shapes may add trial peaks to the fit estimate with a given location and size. A generalized optimizer may then be used to simultaneously fit peak centroids, amplitudes and/or systematic shape parameters to achieve peak fitting.

### Creation of Composite Nuclide Models

The universal peak shape templates may also be used to build composite nuclide models from library and calibration inputs to identify nuclides. A generalized optimizer may then simultaneously fit nuclide activities and/or compensate for systematic calibration errors and to identify significant activity and sufficient shape correlation.

### Whole Spectrum Analysis

Whole spectrum analysis may also be achieved by using a composition of monoenergetic line response functions drawn from a Monte Carlo response index to form ideal energy deposition nuclide spectra including scatter. The universal peak shape templates may then be applied to broaden the ideal spectra to yield trial nuclide models to fit to the spectrum with a generalized optimizer.

### Trial Composite Nuclide Models

Using certificate/library data, the universal peak shape template data and calibration parameters may be used to build trial composite nuclide models to perform calibrations. A generalized optimizer may be used to fit calibration parameters to best match the nuclide models to the calibration spectrum. Auto gain/energy calibration adjustments may also be accomplished by using certificate/library data, universal peak shape templates, and calibration parameters with trial or goal energy slope terms to build trial composite source models. A generalized optimizer may then be used to fit the energy slope term and/or adjust amplifier gain to achieve the best fit to the calibration spectrum

### Exemplary Major Subsystems/Subfunctions (2100)-(4000)

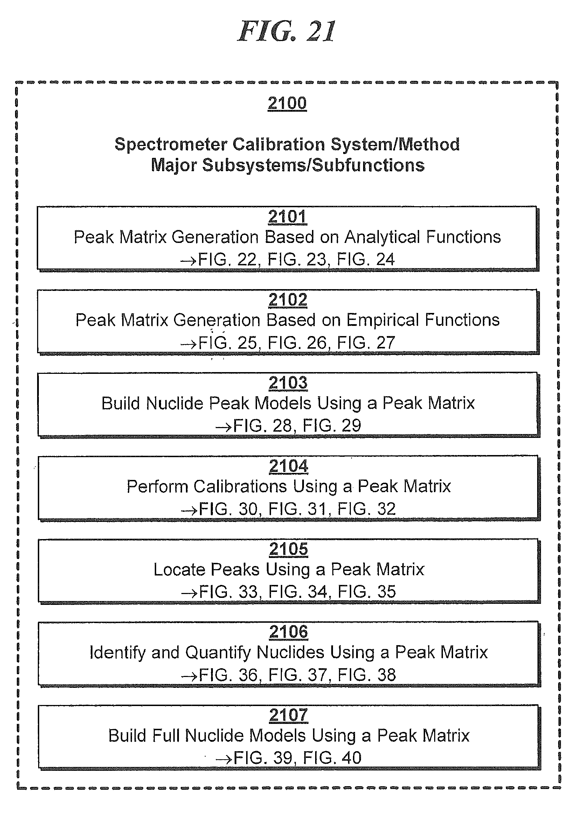

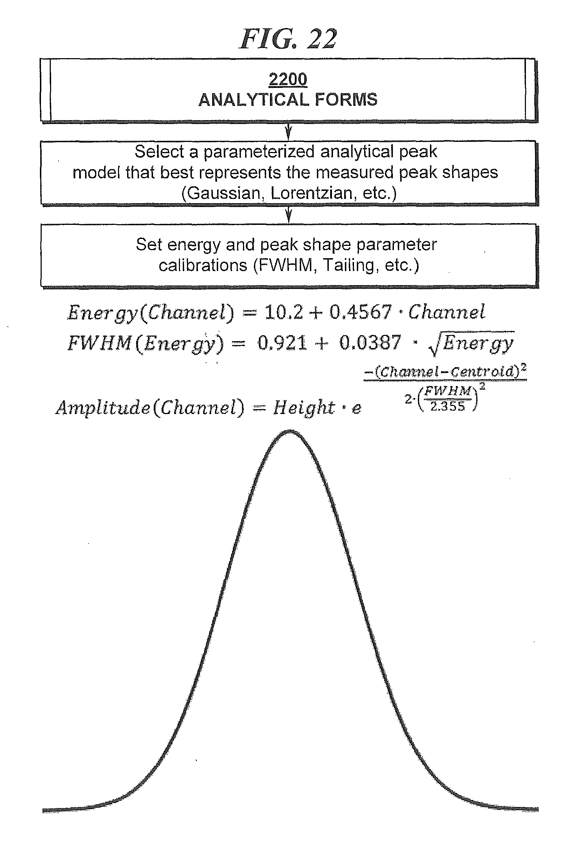

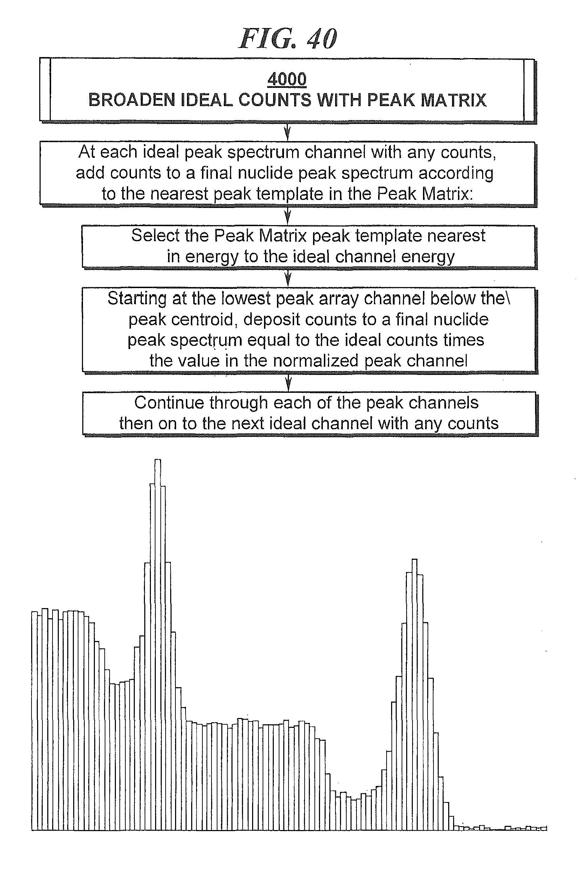

The previous general discussion may be in many cases advantageously implemented using the major subsystem/subfunction overview depicted in FIG. 21 **(2100).** This general overview block diagram illustrates how various major subsystem/subfunction components may be further described in terms of flowcharts that follow in FIG. 22 **(2200) -** FIG. 40 **(4000).** Associated with each of the flowcharts in FIG. 22 **(2200) -** FIG. 40 **(4000)** are graphical depictions of how the peak spectrum is analyzed and how the techniques taught in each flowchart are applied to the particular portion of the calibration system/process. One skilled in the art may augment or modify these general flowcharts to meet individual calibration system requirements, but the overall calibration architecture as taught herein may be best understood by inspecting the exemplary subsystem/subfunction implemenation as described in these drawings.

### System Summary

The present invention system anticipates a wide variety of variations in the basic theme of construction, but can be generalized as a spectrometer calibration system comprising:

(a) spectrum analyzer;

(b) calibration abstraction subsystem; and

(c) peak shape modeling database;
wherein
the spectrum analyzer receives radiation data responsive to a radiation source;
the calibration abstraction subsystem implements a data interpolation algorithm within the spectrum analyzer that drives calibration of the spectrum analyzer via data external to the calibration abstraction subsystem;
the calibration abstraction subsystem maps the radiation data to data representing one or more peak shapes retrieved from the peak shape modeling database to generate a peak shape calibration profile for the spectrum analyzer and the radiation data; and
the spectrum analyzer utilizes the peak shape calibration profile to analyze radiation data received from the radiation source.

This general system summary may be augmented by the various elements described herein to produce a wide variety of invention embodiments consistent with this overall design description.

## Method Summary

The present invention method anticipates a wide variety of variations in the basic theme of implementation, but can be generalized as a spectrometer calibration method, the method operating in conjunction with a spectrometer calibration system comprising:

(a) spectrum analyzer;
(b) calibration abstraction subsystem; and
(c) peak shape modeling database;
wherein
the spectrum analyzer receives radiation data responsive to a radiation source;
the calibration abstraction subsystem implements a data interpolation algorithm within the spectrum analyzer that drives calibration of the spectrum analyzer via data external to the calibration abstraction subsystem;
the calibration abstraction subsystem maps the radiation data to data representing one or more peak shapes retrieved from the peak shape modeling database to generate a peak shape calibration profile for the spectrum analyzer and the radiation data; and
the spectrum analyzer utilizes the peak shape calibration profile to analyze radiation data received from the radiation source;
wherein the method comprises the steps of:

(1) entering radiation data from a radiation detector into the spectrum analyzer;

(2) retrieving peak shapes from a peak shape modeling database;

(3) interpolating the peak shapes to match the radiation data;

(4) if the measured radiation spectrum is properly fitted with the selected peak shapes, passing control to step (6);

(5) otherwise, selecting new peak shapes from the peak shape modeling database and control is passed to the step (3);

(6) generating output shape templates from the interpolated peak shapes; and

(7) using the output shape templates as a baseline response for the spectrum analyzer.

This general method may be modified heavily depending on a number of factors, with rearrangement and/or addition/deletion of steps anticipated by the scope of the present invention. Integration of this and other preferred exemplary embodiment methods in conjunction with a variety of preferred exemplary embodiment systems described herein is anticipated by the overall scope of the present invention.

## System/Method Variations

The present invention anticipates a wide variety of variations in the basic theme of construction. The examples presented previously do not represent the entire scope of possible usages. They are meant to cite a few of the almost limitless possibilities.

This basic system and method may be augmented with a variety of ancillary embodiments, including but not limited to:

• An embodiment wherein the peak shape modeling database comprises data derived from an analytic function.

• An embodiment wherein the peak shape modeling database comprises data derived from empirically collected spectrometer data.

• An embodiment wherein the peak shape modeling database comprises data derived from both analytic functions and empirically collected spectrometer data.

• An embodiment wherein the peak shape modeling database is indexed to permit retrieval of one or more individual peak shape models.

- An embodiment wherein the peak shape modeling database is indexed by spectral energy level to permit retrieval of one or more individual peak shape models.

- An embodiment wherein the system further comprises a means for generating the peak shape modeling database via an analytic function.

- An embodiment wherein the system further comprises a means for generating the peak shape modeling database via empirical data collected from the radiation source.

- An embodiment wherein the spectrometer locates energy peaks within a scanned radiation spectrum using peak shapes residing in the peak shape modeling database.

- An embodiment wherein the spectrometer builds composite nuclide models from a reference library and the peak shape modeling database to identify particular nuclides.

One skilled in the art will recognize that other embodiments are possible based on combinations of elements taught within the above invention description.

## Generalized Computer Usable Medium

As generally illustrated herein, the system embodiments of the present invention can incorporate a variety of computer readable media that comprise computer usable medium having computer readable code means embodied therein. One skilled in the art will recognize that the software associated with the various processes described herein can be embodied in a wide variety of computer accessible media from which the software is loaded and activated. Pursuant to *In re Beauregard,* 35 USPQ2d 1383 (U.S. Patent 5,710,578), the present invention anticipates and includes this type of computer readable media within the scope of the invention.

## CONCLUSION

A spectrometer calibration system and method that permits a database of spectral peak shapes to be applied as basis template functions to characterize a radiation detector has been disclosed. The disclosed system/method interpolates stored arrays representing a series of spectral peak shapes at a range of specified energies to enable formation of a calibration peak shape template at any desired spectral energy level. These basis functions may be generated from analytical functions and/or empirically measured spectral data and produce output shape calibration templates that are independent of the generation method for the basis templates. The disclosed system/method acts as an abstraction layer between the method of peak shape determination and the use of the peak shape basis functions in any subsequent spectroscopic analysis, permitting rapid and inexpensive spectrometer calibration updates without the need for any embedded spectrometer software modifications.

Although a preferred embodiment of the present invention has been illustrated in the accompanying drawings and described in the foregoing Detailed Description, it will be understood that the invention is not limited to the embodiments disclosed, but is capable of numerous rearrangements, modifications, and substitutions without departing from the spirit of the invention as set forth and defined by the following claims.

## Claims

1.  A spectrometer calibration system comprising:

    (a) spectrum analyzer;
    (b) calibration abstraction subsystem; and
    (c) peak shape modeling database;
    wherein
    said spectrum analyzer receives radiation data responsive to a radiation source;
    said calibration abstraction subsystem implements a data interpolation algorithm within said spectrum analyzer that drives calibration of said spectrum analyzer via data external to said calibration abstraction subsystem;
    said calibration abstraction subsystem maps said radiation data to data representing one or more peak shapes retrieved from said peak shape modeling database to generate a peak shape calibration profile for said spectrum analyzer and said radiation data; and

said spectrum analyzer utilizes said peak shape calibration profile to analyze radiation data received from said radiation source.

2. The spectrometer calibration system of Claim 1 wherein said peak shape modeling database comprises data derived from an analytic function.

3. The spectrometer calibration system of Claims 1 or 2 wherein said peak shape modeling database comprises data derived from empirically collected spectrometer data.

4. The spectrometer calibration system of any preceding Claim wherein said peak shape modeling database is indexed to permit retrieval of one or more individual peak shape models.

5. The spectrometer calibration system of Claim 4 wherein said peak shape modeling database is indexed by spectral energy level to permit retrieval of one or more individual peak shape models.

6. The spectrometer calibration system of Claim 1 wherein said system further comprises a means for generating said peak shape modeling database via an analytic function.

7. The spectrometer calibration system of Claim 1 wherein said system further comprises a means for generating said peak shape modeling database via empirical data collected from said radiation source.

8. The spectrometer calibration system of any preceding Claim wherein said spectrometer locates energy peaks within a scanned radiation spectrum using peak shapes residing in said peak shape modeling database.

9. The spectrometer calibration system of any preceding Claim wherein said spectrometer builds composite nuclide models from a reference library and said peak shape modeling database to identify particular nuclides.

10. A spectrometer calibration method, said method operating in conjunction with a spectrometer calibration system, said system comprising:

   (a) spectrum analyzer;
   (b) calibration abstraction subsystem; and
   (c) peak shape modeling database;
   wherein
   said spectrum analyzer receives radiation data responsive to a radiation source;
   said calibration abstraction subsystem implements a data interpolation algorithm within said spectrum analyzer that drives calibration of said spectrum analyzer via data external to said calibration abstraction subsystem;
   said calibration abstraction subsystem maps said radiation data to data representing one or more peak shapes retrieved from said peak shape modeling database to generate a peak shape calibration profile for said spectrum analyzer and said radiation data; and
   said spectrum analyzer utilizes said peak shape calibration profile to normalize radiation data received from said radiation source;
   wherein said method comprises the steps of:

      (1) entering radiation data from a radiation detector into said spectrum analyzer;
      (2) retrieving peak shapes from said peak shape modeling database;
      (3) interpolating said peak shapes to match the said radiation data;
      (4) if said measured radiation spectrum is properly fitted with said selected peak shapes, passing control to step (6);
      (5) otherwise, selecting new peak shapes from said peak shape modeling database and control is passed to said step (3);
      (6) generating output shape templates from said interpolated peak shapes; and
      (7) using said output shape templates as a baseline response for said spectrum analyzer.

11. The spectrometer calibration method of Claim 10 wherein said peak shape modeling database comprises data derived from an analytic function.

12. The spectrometer calibration method of Claims 10 or 11 wherein said peak shape modeling database comprises data derived from empirically collected spectrometer data.

13. The spectrometer calibration method of any of Claims 10 to 12 wherein said peak shape modeling database is indexed to permit retrieval of one or more individual peak shape models.

14. The spectrometer calibration method of Claim 13 wherein said peak shape modeling database is indexed by spectral energy level to permit retrieval of one or more individual peak shape models.

15. The spectrometer calibration method of Claim 10 wherein said system further comprises a means for generating said peak shape modeling database via an analytic function.

16. The spectrometer calibration method of Claim 10 wherein said system further comprises a means for generating said peak shape modeling database via empirical data collected from said radiation source.

17. The spectrometer calibration method of any of Claims 10 to 16 wherein said spectrometer locates energy peaks within a scanned radiation spectrum using peak shapes residing in said peak shape modeling database.

18. The spectrometer calibration method of any of Claims 10 to 16 wherein said spectrometer builds composite nuclide models from a reference library and said peak shape modeling database to identify particular nuclides.

# FIG. 1

0100

| | | |
|---|---|---|
| Radiation Detector 0102 | 0103 | Calibration Data 0110 |
| Radiation Source 0101 | Calibration Software 0104 | Fixed Peak Shape Fitting Algorithm 0105 |

0106

0107

*Prior Art*

EP 2 530 621 A2

# FIG. 2

0200 — Prior Art Spectrometer Calibration Method

0201 — Enter data from radiation detector

0202 — Map analytic function embedded in software to measured radiation data

0203 — Peak shape fitted? — Yes

No

0204 — Rewrite analytic function(s) with new peak shape fitting envelope

0205 — Update hardware/software to include required analytic fitting function

0206 — Record calibration data

0207 — Done

Cost+ Delay

*Prior Art*

19

*FIG. 3*

0300

0304

0304

0304

0303

0301

0304

0302

0311

SMALL SAMPLE
CARRIER

ADJUSTABLE
SAMPLE SHELF

0312

0321

0322

**FIG. 4**

0400

0411

Analytical Function Data 0408

Data Array 0407

Empirical Data 0409

Calibration Abstraction Layer 0405

Data Interpolation Algorithm 0406

0403

Radiation Detector 0402

Calibration Data 0410

Radiation Source 0401

0404

## FIG. 5

0500 — Spectrometer Calibration Method

0501 — Enter data from radiation detector

0502 — Select initial peak shape from data array of stored peak shapes

0503 — Interpolate selected peak shape to match measured radiation spectrum

0504 — Peak shape fitted? — Yes

No

0505 — Select new peak shape from data array of stored peak shapes

0506 — Output shape template from interpolated peak shape array

0507 — Done

# FIG. 6

0600 — Analytical/Empirical Spectrometer Calibration Method

0601 — Determine channel interval count N

Analytical — Analytical/Empirical? — Empirical

0602

Analytical Processing

FIG. 7 (0700)

Empirical Processing

FIG. 8 (0800)

Done

## FIG. 7

0700 — Analytical Spectrometer Calibration Method

FOR k=1 to N

0711 — Complete FWHM and low tail values at each [k]

0712 — Compute peak model template at each [k] at ±m FWHM around centroid

0713 — Normalize the template

0714 — Store template and corresponding information in indexable array

k=k+1

Return

## FIG. 8

0800 — Empirical Spectrometer Calibration Method

0821 — Obtain measured peak calibration data

FOR k=1 to N

0822 — k == Centroid?

Empirical Data
Yes

No — Interpolate/Extrapolate

0823 — Compute FWHM value at [k]

0824 — Shift and adjust nearest measured template to centroid and FWHM

0825 — Normalize the template

0826 — Store template and corresponding information in indexable array

k=k+1

0827 — Return

# FIG. 9

0900

0901

Measured Radiation Calibration Spectrum

0902

Waveform Template Structure

## FIG. 10

1000

1836 keV HPGe peak fit
using analytical Gaussian peak shape calibration

## FIG. 11

1100

1836 keV HPGe peak fit
using empirical peak shape calibration

## FIG. 12

1200

*Prior Art*

*FIG. 13*

1300

Peak Shape Calibration Using Analytical Model

*FIG. 14*

1400

Peak Shape Calibration Using Empirical Model

## FIG. 15

1500

*Prior Art*

# FIG. 16

1600

Peak Shape Calibration Using Analytical Model

*FIG. 17*

1700

Peak Shape Calibration Using Empirical Model

*FIG. 18*

1800

*Prior Art*

*FIG. 19*

1900

Peak Shape Calibration Using Analytical Model

# FIG. 20

2000

Peak Shape Calibration Using Empirical Model

# FIG. 21

## 2100

### Spectrometer Calibration System/Method
### Major Subsystems/Subfunctions

#### 2101
Peak Matrix Generation Based on Analytical Functions
→FIG. 22, FIG. 23, FIG. 24

#### 2102
Peak Matrix Generation Based on Empirical Functions
→FIG. 25, FIG. 26, FIG. 27

#### 2103
Build Nuclide Peak Models Using a Peak Matrix
→FIG. 28, FIG. 29

#### 2104
Perform Calibrations Using a Peak Matrix
→FIG. 30, FIG. 31, FIG. 32

#### 2105
Locate Peaks Using a Peak Matrix
→FIG. 33, FIG. 34, FIG. 35

#### 2106
Identify and Quantify Nuclides Using a Peak Matrix
→FIG. 36, FIG. 37, FIG. 38

#### 2107
Build Full Nuclide Models Using a Peak Matrix
→FIG. 39, FIG. 40

## FIG. 22

| 2200 |
| --- |
| ANALYTICAL FORMS |

↓

Select a parameterized analytical peak
model that best represents the measured peak shapes
(Gaussian, Lorentzian, etc.)

↓

Set energy and peak shape parameter
calibrations (FWHM, Tailing, etc.)

$$Energy(Channel) = 10.2 + 0.4567 \cdot Channel$$

$$FWHM(Energy) = 0.921 + 0.0387 \cdot \sqrt{Energy}$$

$$Amplitude(Channel) = Height \cdot e^{\frac{-(Channel-Centroid)^2}{2 \cdot \left(\frac{FWHM}{2.355}\right)^2}}$$

# *FIG. 23*

**2300**
**ANALYTICAL PEAK GENERATOR**

At a specified energy, calculate corresponding
peak shape parameters such as FWHM

Based on the selected peak model, create
the discrete peak array with an integer
centroid channel with the peak shape parameters
determined for the specified energy

Normalize the peak area to unity by dividing
each channel by the sum of the channels

## FIG. 24

| 2400 |
| --- |
| **PEAK MATRIX** |

↓

| Select the list of energies over the spectral range of interest at intervals of interest |
| --- |

↓

| Use the Analytical Peak Generator to create the set of peak templates at the selected list of energies |
| --- |

↓

| Store the set of peak templates as the current Peak Matrix |
| --- |

## *FIG. 25*

**2500**
**MEASURED CALIBRATION PEAKS**

Measure calibration source with representative isolated peaks and accurate energy and FWHM calibrations

Record calibration net peak arrays (continuum subtracted) for each isolated calibration peak, with associated energy calibration array, centroid energy and FWHM for each calibration peak

## FIG. 26

| 2600<br>EMPIRICAL PEAK GENERATOR |
|---|

↓

| At a specified energy, calculate corresponding<br>centroid channel offset and goal FWHM |
|---|

↓

| Transform the nearest recorded calibration peak array into<br>a discrete peak array with<br>integer centroid channel and the goal FWHM: |
|---|

↓

| Create a transform energy calibration array that maps<br>the measured centroid energy to the centroid of<br>the goal channel and resizes the width according to the<br>ratio of the measured FWHM to the goal FWHM |
|---|

↓

| Rebin the calibration peak from the transform energy<br>calibration array into the current energy calibration<br>and normalize the peak area to unity |
|---|

## FIG. 27

**2700**
**PEAK MATRIX**

↓

Select the list of energies over the spectral
range of interest at intervals of interest

↓

Use the Empirical Peak Generator to create the set
of peak templates at the selected list of energies

↓

Store the set of peak templates as the current Peak Matrix

## FIG. 28

**2800**
**BUILD IDEAL NUCLIDE SPECTRUM**

Determine set of nuclide peak energies
and associated peak counts:

Emission energies per lines in reference nuclide library

Counts from reference library line abundances, nuclide
activity, peak efficiency calibration and spectrum live time

Place counts in an ideal spectrum, distributed
proportionally in adjacent bins to accurately reflect
centroid positions per the current energy calibration

## *FIG. 29*

**2900
BROADEN IDEAL COUNTS WITH PEAK MATRIX**

At each ideal spectrum channel with any counts,
add counts to a final nuclide model peak spectrum
according to the nearest template in the Peak Matrix:

Select the peak template nearest in energy
to the ideal spectrum channel energy

Starting at the lowest template channel below
the centroid, deposit counts to a final
nuclide peak spectrum equal to the ideal
counts times the value in the template channel

Continue through each of the template channels then
on to the next ideal spectrum channel with any counts

## FIG. 30

> **3000**
> **MEASURE CALIBRATION SOURCE**
> **AND BUILD TRIAL MODEL**

> Acquire a spectrum with known nuclides
> (energies and abundances) and activities

> Using trial calibration parameters, generate a trial
> Peak Matrix using either analytical or empirical functions

> Build the trial nuclide peak models using the
> known source information and the trial Peak Matrix

*FIG. 31*

**3100**
**ADD NUCLIDE PEAK MODEL**
**TO CONTINUUM AND COMPARE**

Using any standard baseline estimation technique,
determine the measured spectrum continuum,
at least for the peak regions of interest

Add the estimated continuum to the
nuclide peak spectrum by channel

Evaluate how closely the model matches the
measurement using typical metrics such
as least squares/Chi$^2$ or shape correlation

## *FIG. 32*

| **3200** |
| **OPTIMIZE CALIBRATION PARAMETERS FOR BEST FIT** |

↓

| Iteratively adjust the input calibration parameters (energy, FWHM and efficiency calibrations) to new trial values |

↓

| Rebuild the Peak Matrix and the new trial nuclide model, evaluating and storing each trial match metric value |

↓

| Using any standard optimization method (Steepest Descent, Nelder-Meade Downhill Simplex, etc.), drive parameters to achieve the best fit |

## *FIG. 33*

| 3300<br>DETERMINE CONTINUUM AND<br>GENERATE PEAK MATRIX |
|---|

↓

| Using any standard baseline estimation technique,<br>determine the measured spectrum continuum |
|---|

↓

| Generate a Peak Matrix using current energy and shape<br>calibrations with either analytical or empirical functions |
|---|

## FIG. 34

| 3400 |
| --- |
| BUILD A PEAK PRESENCE METRIC SPECTRUM |

Scan peak templates across the spectrum,
channel by channel, with respective templates
nearest in energy at each channel

With the peak template centered on each channel, calculate
Pearson's correlation coefficient measuring the relative
match in shape (independent of amplitude)
and the statistical significance of the measured counts
above the continuum to form a single,
normalized peak presence metric array

## FIG. 35

| |
|---|
| **3500**<br>**DESIGNATE PEAKS** |

↓

| |
|---|
| Peak regions with the peak presence metric above a specified threshold are designated as peak regions |

↓

| |
|---|
| Peak centroids are set as the weighted average of the peak presence metric above the threshold in each peak region |

EP 2 530 621 A2

## FIG. 36

**3600**
**GENERATE PEAK MATRIX AND**
**CANDIDATE NUCLIDE MODELS**

Generate a Peak Matrix using current energy and shape calibrations with either analytical or empirical functions

For each candidate nuclide from a nuclide library of reference library, build nuclide peak models with amplitudes proportional to activities

# FIG. 37

| 3700 FIT CANDIDATE NUCLIDE MODELS TO MEASURED SPECTRUM |
|---|
| Iteratively adjust the candidate nuclide activities and calibration tolerance parameters to new trial values |
| Add the scaled composite nuclide models to the baseline estimation continuum and evaluate how closely the trial model matches the measurement using typical metrics such as least squares/Chi$^2$ or shape correlation |
| Using any standard optimization method (Steepest Descent, Nelder-Meade Downhill Simplex, etc.), drive parameters to achieve the best fit |

## *FIG. 38*

**3800**
**REPORT ACTIVITIES OF IDENTIFIED NUCLIDES**

For each fitted candidate with statistically significant activity, perform identification:

Subtract other fitted candidates and the continuum from the measured spectrum

Compare residual to the candidate model, calculating the correlation coefficient

Identify each candidate with correlation above a specified threshold and report the fitted activity

Use the Peak Matrix for an unknown peak search of the final spectrum residual

## *FIG. 39*

**3900
BUILD IDEAL NUCLIDE FULL MODEL**

For each nuclide monoenergetic emission,
include an ideal response function that includes
downscattered counts in addition to peak
counts, typically generated with a
Monte Carlo model of the measurement geometry
while tallying the energy deposition in the detector

A general index of standard ideal monoenergetic
response functions that includes the downscatter
component for the given scattering environment
could be generated, stored and employed as
components in the composite nuclide model

## *FIG. 40*

**4000**
**BROADEN IDEAL COUNTS WITH PEAK MATRIX**

At each ideal peak spectrum channel with any counts,
add counts to a final nuclide peak spectrum according
to the nearest peak template in the Peak Matrix:

Select the Peak Matrix peak template nearest
in energy to the ideal channel energy

Starting at the lowest peak array channel below the\
peak centroid, deposit counts to a final nuclide
peak spectrum equal to the ideal counts times
the value in the normalized peak channel

Continue through each of the peak channels
then on to the next ideal channel with any counts

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61491766 B
- US 13457019 B

- US 5710578 A